(19) Europäisches Patentamt
European Patent Office
Office européen des brevets

(11) EP 0 977 803 B1

(12) **EUROPÄISCHE PATENTSCHRIFT**

(45) Veröffentlichungstag und Bekanntmachung des Hinweises auf die Patenterteilung:
**28.03.2001 Patentblatt 2001/13**

(21) Anmeldenummer: **98924141.9**

(22) Anmeldetag: **17.04.1998**

(51) Int Cl.$^7$: **C08J 7/12**, A61L 15/60, C08F 8/42, B01J 20/32

(86) Internationale Anmeldenummer:
**PCT/EP98/02287**

(87) Internationale Veröffentlichungsnummer:
**WO 98/47951 (29.10.1998 Gazette 1998/43)**

(54) **SUPERABSORBER MIT KONTROLLIERTER ABSORPTIONSGESCHWINDIGKEIT**

SUPERABSORBANTS WITH CONTROLLED ABSORPTION SPEED

SUPERABSORBANTS A VITESSE D'ABSORPTION CONTROLEE

(84) Benannte Vertragsstaaten:
**AT BE CH CY DE DK ES FI FR GB GR IE IT LI LU MC NL PT SE**

(30) Priorität: **21.04.1997 DE 19716657**

(43) Veröffentlichungstag der Anmeldung:
**09.02.2000 Patentblatt 2000/06**

(73) Patentinhaber: **STOCKHAUSEN GmbH & Co. KG**
**47805 Krefeld (DE)**

(72) Erfinder:
- **JONAS, Gerd**
  **D-47906 Kempen (DE)**
- **PFLÜGER, Klaus**
  **D-47807 Krefeld (DE)**
- **MERTENS, Richard**
  **D-47803 Krefeld (DE)**

(74) Vertreter: **Klöpsch, Gerald, Dr.-Ing. Patentanwalt**
**Boehmert & Boehmert**
**Anwaltssozietät,**
**Postfach 18 01 62**
**40568 Düsseldorf (DE)**

(56) Entgegenhaltungen:
**EP-A- 0 543 303**
**EP-A- 0 705 643**
**WO-A-96/05234**
**US-A- 5 676 660**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 977 803 B1

## Beschreibung

Die Erfindung betrifft hydrophile, hochquellfähige Polymere für wäßrige Flüssigkeiten, sogenannte Superabsorber, die mit reaktiven, wasserunlöslichen, filmbildenden, hydrophoben Polymeren und einer weiteren reaktiven Komponente, welche befähigt ist mit Carboxylgruppen oder Carboxylatanionen unter Ausbildung von zusätzlichen Vernetzungsstellen an der Partikeloberfläche zu reagieren, beschichtet sind, die Herstellung solcher beschichteter Superabsorber und deren Verwendung in Hygieneartikeln, die der Absorption von Körperflüssigkeiten dienen.

Hochquellfähige Polymere, die durch Polymerisation ungesättigter Säuren, wie beispielsweise Acrylsäure, Methacrylsäure, Acrylamidopropansulfonsäure usw. beziehungsweise teilneutralisiert als deren Alkali- oder Ammoniumsalze in Gegenwart geringer Mengen mehrfach ungesättigter Verbindungen erhalten werden können, sind bereits bekannt.

Bekannt sind auch superabsorbierende, vernetzte Polymere, die durch Pfropfcopolymerisation ungesättigter Säuren auf unterschiedliche Matrices; wie beispielsweise Polysaccharide, Polyvinylalkohole, Polyalkylenoxide sowie deren Derivate erhalten werden können. Die genannten hochquellfähigen Polymere zeichnen sich dadurch aus, daß sie in der Lage sind, unter Quellung und Ausbildung von Hydrogelen große Mengen an wäßrigen Flüssigkeiten, wie z.B. Blut oder Urin aufzunehmen und die aufgenommene Flüssigkeitsmenge auch unter Druck zurückzuhalten.

Durch ihre charakteristischen Absorptionseigenschaften finden die Polymeren bevorzugt Anwendung als Absorptionsmittel in Hygieneartikeln.

Gemäß dem Stand der Technik können die Eigenschaften dieser Hydrogele durch eine Oberflächenbehandlung mit bestimmten Substanzen modifiziert werden. Zu diesem Zweck werden herkömmliche Hydrogele, die getrocknet, gemahlen und gegebenenfalls abgesiebt sind, in Pulverform mit reaktiven Verbindungen umgesetzt, d. h. mit Verbindungen, die Gruppen enthalten, die mit den Carboxylgruppen der Hydrogele unter kovalenter Vernetzung auf der Oberfläche der Granulatpartikel reagieren können. Bei diesen reaktiven Verbindungen kann es sich z.B. um Di- oder Polyole, Bisepoxide, höhere Epoxide oder auch um cyclische Kohlensäureester handeln.

Eine derartige Oberflächenvernetzung ist beispielsweise in der DE 40 20 780 C1 beschrieben, wobei als Oberflächenvernetzer Alkylencarbonate eingesetzt werden.
Die Oberflächenbehandlung von hydrophilen, hochquellfähigen Polymeren mit reaktiven Substanzen zur Oberflächenvernetzung wird in zahlreichen weiteren Veröffentlichungen beschrieben.

Die EP-A 349240 (zur Erzielung eines Gleichgewichtes zwischen Absorptionsvermögen und Absorptionsgeschwindigkeit sowie Gelfestigkeit und Saugkraft) beschreibt die Nachbehandlung von Polymeren mit zwei- oder mehr funktionellen Gruppen enthaltenden Vernetzungsmitteln, die mit den Carboxyl- oder Carboxylatgruppen oder anderen im Polymer enthaltenen Gruppen reagieren können. Üblicherweise wird das hydrophile, hochquellfähige pulverförmige Polymer direkt mit einer oder mehreren reaktiven hydrophilen Komponenten, gegebenenfalls unter Verwendung von Wasser und organischem Lösungsmittel, vermischt.

Als reaktive, oberflächenvernetzende Komponente werden in der EP-B 317 106 unter anderem Di- oder Polyole, Di- oder Polyglycidylether, Haloepoxiverbindungen, Polyisocyanate, Polyamine, polyfunktionelle Aziridinverbindungen, oder Alkyl-di-(tri)-halogenide beschrieben.

Die Oberflächennachvernetzung erfolgt dadurch, daß anschließend an die Beschichtung der superabsorbierenden Polymerpulver eine thermische Behandlung der Produkte durchgeführt wird.

Gemeinsam ist den beschriebenen Verfahren, daß durch die thermische Behandlung des hochquellfähigen, pulverförmigen Polymeren in Gegenwart der erwähnten reaktiven Komponenten eine signifikante Verbesserung der Aufnahmekapazität unter Druck für wäßrige Flüssigkeiten, wie z. B. Urin, Blut oder andere Körperflüssigkeiten erreicht wird.

Bereits bekannt ist auch die Oberflächenbehandlung von granulierten, hydrophilen, hochquellfähigen Polymeren mit Additiven zur Entstaubung der granulierten Polymeren, wie z.B. mit Polyolen oder Polyethylenglycolen in der PCT/US93/02872. In der Offenlegungsschrift DE 44 26 008 Alwird die Verwendung von nichtreaktiven, wasserunlöslichen, filmbildenden Polymeren, u.a. von Homo- und Copolymerisaten von Acryl- und Methacrylsäureestern, Vinylestern, Polyamiden, Polyestem etc. zur Entstaubung und zur Verbesserung der Abriebbeständigkeit erwähnt. In der DE 195 24 724 A1 wird ebenfalls zur Verbesserung der Abriebfestigkeit, aber auch zur Verringerung der Verbackungsneigung die Oberflächenbehandlung mit nicht reaktiven, wasserlöslichen Wachsen beschrieben. Die DE 44 14 117 A1 beschreibt die Verwendung von nicht reaktiven Polysiloxanen, z.B. Polydimethylsiloxanen und Polymethylphenylsiloxanen zur Oberflächenbehandlung von hydrophilen, hochquellfähigen Polymeren zum Zweck der Entstaubung eines superabsorbierenden Polymeren.

In der EP-A 705 643 A1 werden wasserabsorbierende Polymere mit verbesserten Eigenschaften beschrieben, die durch Behandlung von vernetzten Polymeren auf der Basis von Acrylsäure oder deren Salzen mit einem modifizierten Siliconöl erhalten werden, welches funktionelle Gruppen aufweist, die mit Carboxylgruppen und/oder Carboxylatgruppen reagieren können. Als Beispiele werden amino- und epoxyfunktionelle Silicone genannt. Die Silicone können in Substanz, als Lösung in einem organischen Lösungsmittel oder als Emulsion aufgetragen werden. Bei Bedarf

kann der Polyacrylat/Silicon-Blend bei Temperaturen von 60 - 200 °C getempert werden.
Die mit den beschriebenen funktionellen Siliconölen und dem beschriebenen Verfahren erhaltenen Produkte weisen ein verbessertes Anticakingverhalten und eine geringere Tendenz zum Stauben auf. Insbesondere wird durch die beschriebene Behandlung die Absorption unter Druck deutlich verbessert. Die Produkte besitzen eine gute anfängliche Absorption unter Druck sowie Absorptionskapazität. Die in EP-A 705 643 verwendeten Beispiele 1 bis 4 zeigen, daß die Absorption der Produkte mit funktionellem Siliconöl sowohl vor als auch nach Temperung der Materialien nach 10 Minuten höher liegt und die Absorptionsgeschwindigkeit damit größer ist als bei nicht oberflächenbehandeltem Material gemäß den Vergleichsbeispielen 1 bis 8.
Auch die absorbierenden Polymere der EP-A- 705 643 gehören somit zu den insoweit konventionellen Superabsorbern, die dazu tendieren, sofort nach dem Kontakt mit wäßriger Flüssigkeit diese Flüssigkeit rasch aufzunehmen, wodurch in der Nähe der Eintrittsstelle starke Quellung auftritt und es zum sogenannten Gelblocking kommt.

Seit langem bekannt sind auch Methoden und Additive zur Verbesserung der Aufnahmegeschwindigkeit von superabsorbierenden, hydrophilen Polymeren.

Die DE 44 18 818 A1 beschreibt den Zusatz unter anderem von $CO_2$, Alkali-, Erdalkali- sowie Ammoniumcarbonaten und -bicarbonaten zur Monomerenlösung als Treibmittel zwecks Steigerung der Aufnahmegeschwindigkeit von hochquellbaren Polymeren.

Das US-Patent 4,548,847 beschreibt Hydrogele, die durch mindestens zweiwertige Metallkationen, wie z. B. $Ca^{2+}$ oder $Ba^{2+}$, reversibel vernetzt sind. Durch Mitverwendung einer Substanz, die in der Lage ist, die Metallkationen zu entfernen, kann eine Verzögerung des Quellens erreicht werden. Bevorzugt werden wasserlösliche Chelatbildner wie z. B. $Na_2HPO_4$, Natriumhexametaphosphat und das Dinatriumsalz von Ethylendiamintetraacetat. Diese Substanzen bewirken, daß die reversiblen Vernetzungsstellen, die von den mindestens zweiwertigen Metallkationen gebildet werden, durch die Komplexierung abgebaut werden. Durch die sinkende Vernetzungsdichte können die Produkte stärker quellen. Das Patent beschreibt ebenfalls absorbierende Artikel wie Wundauflagen und Tampons, die die saugfähigen Polymeren mit verzögerter Quellcharakteristik enthalten. Beschrieben wird unter anderem ein aus Schichten aufgebauter saugfähiger Artikel (Wundauflage) wobei in jeder Schicht das erfindungsgemäße Polymere punktuell enthalten ist. Kombinationen der erfindungsgemäßen Polymeren mit anderen, wäßrige Flüssigkeiten absorbierenden Polymeren werden nicht erwähnt.

Die Patentanmeldungen GB 2 280 115 A und WO 95/00183 beschreiben einen absorbierenden Artikel, der in der Region, in die die Körperflüssigkeit abgegeben wird, umhüllte superabsorbierende Partikel enthält. Die Umhüllung der superabsorbierenden Partikel verhindert deren Quellung, bis daß die Umhüllung sich in der Test- oder Körperflüssigkeit aufgelöst hat oder von ihr penetriert wird. Es handelt sich somit um superabsorbierende Partikel, die eine Aktivierungszeit bis zum Einsetzen der Quellung aufweisen, welche durch das Material der Umhüllung und deren Dicke variiert werden kann. Als Materialien für die Umhüllung werden nicht reaktive Polysaccharide wie Gelatine, mikrokristalline Cellulose und Cellulosederivate erwähnt. Die Aktivierungszeit bis zum Einsetzen der Quellung soll mindestens fünf, bevorzugt 15 und stärker bevorzugt 60 min lang sein.

Die Anmeldung FR 2 627 080 A1 beschreibt ebenfalls absorbierende Artikel, die mehrere Superabsorber beinhalten, welche eine unterschiedliche Verzögerung des Quellverhaltens zeigen. Die beschriebenen Superabsorber bestehen aus Polyacrylaten, die mit einer sich langsam auflösenden Umhüllung ausgestattet sind.

Superabsorber mit derartiger Oberflächenbehandlung besitzen den Nachteil, daß bereits eine geringfügige Erstbenetzung, ohne notwendigerweise selbst die Quellung des hochquellfähigen Polymeren auszulösen, zum Abbau der Oberflächenbehandlung durch Auf- bzw. Ablösen, Quellung oder Zersetzung führen. Nachdem die Umhüllung der Polymeren aufgelöst ist, besitzen derartige Superabsorber die Quellgeschwindigkeit eines konventionellen, nicht oberflächenbehandelten Materials. Dadurch geht der gewünschte Effekt des verbesserten Flüssigkeitsmanagements im absorbierenden Artikel verloren.

Superabsorber mit langsamer, möglichst gleichmäßiger Quellgeschwindigkeit ohne verzögertes Anquellverhalten und deren Verwendung in absorbierenden Artikeln werden in GB 2 280 115 A, WO 95/00183 und FR 2 627 080 A1 nicht beschrieben.

In der Patentanmeldung EP 0 631 768 A1 wird ein absorbierender Artikel beschrieben, in dem ebenfalls Superabsorber mit unterschiedlicher Absorptionsgeschwindigkeit verwendet werden. Die Unterschiede zwischen den verschiedenen verwendeten Superabsorbern rühren von einer unterschiedlichen Korngrößenverteilung her (Typ 1 : 600 - 850 μm, Typ 2: < 250 um) und sind entsprechend klein. Oberflächenbehandelte Superabsorber und die Verwendung derselben in absorbierenden Artikeln werden nicht beschrieben.

Die Entwicklung zu immer dünneren Windelkonstruktionen im Hygienebereich geht einher mit einer stärkeren Verdichtung des Absorptionskems unter Zunahme des Superabsorberanteils in der Superabsorber/Zellstoffmischung. Dadurch wird die homogene Flüssigkeitsverteilung im "Absorbent Core" ein immer wichtigeres Kriterium für die vollständige Nutzung der Speicherkapazität der hochquellfähigen Polymeren.

Durch die Reduzierung der Zellstoffmenge im Absorptionskern wird die Flüssigkeitsverteilung negativ beeinflußt. Der Einsatz zusätzlicher Hilfsmittel wie spezielle Vliese zur Optimierung der Flüssigkeitsverteilung ist mittlerweile

Stand der Technik geworden.

Auch an die hochquellfähigen, flüssigkeitsspeichernden Polymeren werden zusätzliche Anforderungen bezüglich des Flüssigkeitsmanagements gestellt. Die flüssigkeitsspeichernden Polymeren müssen auch in einem Superabsorber / Zellstoffgemisch mit hohem Anteil an hochquellfähigen Polymeren die schnelle Verteilung von Flüssigkeit innerhalb des Superabsorber /-Zellstoffgemischs zulassen bzw. unterstützen.

Konventionelle Superabsorber, die häufig gerade bezüglich einer hohen Geschwindigkeit der Flüssigkeitsaufnahme optimiert sind, tendieren dazu, sofort nach dem Kontakt mit wäßriger Flüssigkeit diese Flüssigkeit aufzunehmen und zu speichern. Damit ist eine starke Volumenvergrößerung der Polymerpartikel verbunden.

In der Nähe der Eintrittsstelle von Körperflüssigkeit in den Absorptionskern quellen die absorbierenden Polymeren wegen ihrer hohen Aufnahmegeschwindigkeit gegenüber wäßrigen Flüssigkeiten sehr stark auf, da die Verteilung der Flüssigkeit wegen des geringen Zellstoffanteils im Absorptionskern langsamer erfolgt als die Flüssigkeitsspeicherung durch das hochquellfähige Polymere. Durch diesen Geschwindigkeitsunterschied wird ein sehr großer Teil der Flüssigkeit in unmittelbarer Nähe der Eintrittsstelle absorbiert.

Verstärkend für diesen Effekt kommt hinzu, daß die Quellung eines konventionellen Superabsorbers dergestalt erfolgt, daß unmittelbar nach der Flüssigkeitszugabe eine sehr hohe Absorptionsräte für wäßrige Flüssigkeiten beobachtet wird, verbunden mit einem steilen Anstieg der Absorption. Bereits nach wenigen Minuten hat ein hochquellfähiges Polymeres auf der Basis von vernetztem, teilneutralisiertem Polyacrylat unter den Bedingungen freier Quellung ca. 95 % seiner Absorptionskapazität erreicht. Anschließend nähert sich die aufgenommene Flüssigkeitsmenge asymptotisch ihrem Gleichgewichtswert. Dadurch wird unmittelbar nach der Zugabe der zu absorbierenden Flüssigkeit überproportional viel Flüssigkeit pro Zeiteinheit von den beschriebenen hochquellfähigen Polymeren aufgenommen. Dieses Verhalten ist eine typische Stoffeigenschaft vernetzter Polyacrylate.

Durch die mit der Absorption von Flüssigkeit verbundene Expansion der Polymerpartikel kommt es in dem Bereich des Absorptionkerns um die Eintrittsstelle der Körperflüssigkeit zum Verschließen von Zwischenräumen und Poren der SAP-Fluff-Matrix. Da der Flüssigkeitstransport durch Diffusion durch ein gequollenes Hydrogel um Größenordnungen langsamer verläuft als durch Strömung in Zwischenräumen, kommt es zu einer Abdichtung in diesem Bereich. Dieser Effekt wird in der Literatur häufig als sogenanntes "Gelblocking" bezeichnet. Nachfolgende Mengen an Körperflüssigkeit können nicht mehr in das Absorbent Core eindringen und werden unkontrolliert über die Oberfläche des bereits oberflächlich gesättigten Bereiches bis zu dessen Rand transportiert.

Als Folge davon werden das Rücknäßverhalten und das Leckverhalten (Leakage) des Hygieneprodukts verschlechtert. Zudem sinkt die Speicherkapazität des Absorptionskerns, da tiefer im Absorbent Core eingebettete, hochsaugfähige Polymere durch die Quellung der Partikel an der Oberfläche nicht mehr von weiterer Körperflüssigkeit späterer Dosierungen erreicht werden und dadurch nicht zur Gesamtspeicherkapazität beitragen können.

Aufgabe der vorliegenden Erfindung ist es daher, hochquellfähige Polymere zur Verfügung zu stellen, deren Geschwindigkeit der Flüssigkeitsaufnahme in einem weiten Bereich kontrolliert eingestellt werden kann.

Aufgabe der vorliegenden Erfindung ist es außerdem, hochquellfähige Polymere zur Verfügung zu stellen, deren Flüssigkeitsaufnahme in einem weiten Bereich mit möglichst konstanter Geschwindigkeit verläuft.

Aufgabe der vorliegenden Erfindung ist es zusätzlich, hochquellfähige Polymere mit kontrollierter Absorptionsgeschwindigkeit und ausreichender Rieselfähigkeit zur Verfügung zu stellen, die in absorbierenden Hygieneartikeln eingesetzt werden können.

Aufgabe der vorliegenden Erfindung ist es femer, hochquellfähige Polymere zur Verfügung zu stellen, die durch eine kontrollierte Einstellung der Geschwindigkeit der Flüssigkeitsaufnahme das oben beschriebene ungünstige und damit nicht erwünschte Verhältnis zwischen Quellgeschwindigkeit des Superabsorbers und Verteilungsgeschwindigkeit der Körperflüssigkeit im Absorptionskern gegenüber wäßrigen Flüssigkeiten optimieren.

Aufgabe der vorliegenden Erfindung ist es weiterhin, daß die Gesamtspeicherkapazität der in dem betreffenden Hygieneartikel enthaltenen Menge an hochquellfähigem Polymeren besser genutzt werden kann.

Außerdem ist es Aufgabe der vorliegenden Erfindung, daß die Flüssigkeitsverteilung im Absorptionskern weniger durch Gelblocking negativ beeinflußt wird.

Ferner ist es Aufgabe der vorliegenden Erfindung, ein Verfahren zur Herstellung von hochquellfähigen Polymeren mit kontrollierter Absorptionsgeschwindigkeit und ausreichender Rieselfähigkeit zur Verfügung zu stellen.

Überraschenderweise wurde gefunden, daß wäßrige Flüssigkeiten absorbierende, hochquellfähige Polymere, die aus monoethylenisch ungesättigten, Säuregruppen tragenden Monomeren und gegebenenfalls weiteren, damit copolymerisierbaren Monomeren sowie gegebenenfalls als Pfropfgrundlage geeigneten wasserlöslichen Polymeren und mehrfach ungesättigten, als Vemetzer fungierenden Monomeren aufgebaut sind, das oben beschriebene, gewünschte Quellverhalten, nämlich die kontrollierte, in ihrem Ausmaß steuerbare Verlangsamung des Absorptionsvorgangs, in Verbindung mit einer konstanten Quellgeschwindigkeit dadurch aufweisen, daß sie mit einem reaktiven, wasserunlöslichen hydrophoben Polymeren sowie einer weiteren reaktiven Komponente, die befähigt ist, mit Carboxylgruppen oder Carboxylationen unter Ausbildung von zusätzlichen Vernetzungsstellen an der Partikeloberfiäche zu reagieren, beschichtet und bei einer bestimmten Temperatur getempert werden.

Es wurde außerdem gefunden, daß durch den gemeinsamen Einsatz von erfindungsgemäß einzusetzenden hydrophoben Polymeren zusammen mit einer weiteren reaktiven Komponente, die in der Lage ist, mit Carboxyl- und Carboxylatgruppen zu reagieren und dadurch zu einer zusätzlichen Vernetzung an der Oberfläche der hochquellfähigen, hydrophilen Polymerpartikel führt, z. B. Ethylencarbonat oder mehrwertige Alkohole (Glycerin etc.), die Quellgeschwindigkeit in erheblich stärkerem Maße beeinflußt wird, als dies ohne Nachvernetzungsmittel der Fall ist. In der Regel werden für die Oberflächennachvernetzung Mengen von 0,1 Gew% bis 1 Gew% des Nachvernetzungsmittels und zwischen 0,005 und 2 % des erfindungsgemäßen hydrophoben Polymeren eingesetzt.

Dadurch können Produkte mit kontrollierter Aufnahmegeschwindigkeit gegenüber wäßrigen Flüssigkeiten hergestellt werden, deren Rieselfähigkeit in einem Bereich liegt, der eine maschinelle Verarbeitung zuläßt.

Die vorliegende Erfindung betrifft somit ein hydrophiles, hochquellfähiges, pulverförmiges Polymerisat, dadurch gekennzeichnet, daß es mit einem reaktiven, wasserunlöslichen Polymeren beschichtet und bei erhöhter Temperatur in Gegenwart eines Nachvernetzungsmittels nachbehandelt ist, so daß infolge der beschriebenen Behandlung eine kontrollierte Verlangsamung der Aufnahmegeschwindigkeit gegenüber einem nicht mit reaktiven Siliconen behandelten Standardprodukt resultiert, ohne daß die Rieselfähigkeit des erfindungsgemäßen hochquellfähigen Polymeren mit kontrollierter Aufnahmegeschwindigkeit unter einen Schwellenwert von 8 g/s fällt.

Gegenstand der Erfindung sind daher wäßrige Flüssigkeit absorbierende quellbare Polymere, die dadurch gekennzeichnet sind, daß sie aufgebaut aus

a) monoethylenisch ungesättigten Säuregruppen tragenden Monomeren,

b) gegebenenfalls weiteren, damit copolymerisierbaren Monomeren und

c) gegebenenfalls als Pfropfgrundlage geeigneten wasserlöslichen Polymeren und

d) wenigstens zweifach ungesättigten, als Vernetzer fungierenden Monomeren, dadurch gekennzeichnet, daß die Polymeren mit

e) einem reaktiven, wasserunlöslichen hydrophoben Polymeren sowie

f) einer weiteren reaktiven Komponente, die befähigt ist, mit Carboxylgruppen oder Carboxylatanionen unter Ausbildung von zusätzlichen Vernetzungsstellen an der Partikeloberfläche zu reagieren, beschichtet und getempert worden sind.

Die Komponenten a) bis d) sind in dem entsprechenden Polymeren in folgenden Mengen, bezogen auf die Komponente a), enthalten:

a) 60 - 99,99 Gew.%, vorzugsweise 90 - 99,9 Gew.%
b) 0,1 - 35 Gew.%, vorzugsweise 0,5 - 20 Gew.%
c) 0 - 30 Gew.%, vorzugsweise 0 bis 20 Gew.%
d) 0,01 - 3,0 Gew.%, vorzugsweise 0,05 bis 1,0 Gew.%

Die Mengenangaben beziehen sich auf die Masse an trockenem Polymer.

Die Beschichtung der hochquellfähigen Polymere mit dem erfindungsgemäß einzusetzenden hydrophoben Polymeren kann als reine Substanz erfolgen, das erfindungsgemäß einzusetzende hydrophobe Polymer kann aber auch als Lösung in einem geeigneten organischen Lösungsmittel, wie z. B. Chloroform, Toluol, Tetrahydrofuran etc. aufgetragen werden.

Geeignete chemisch oder physikalisch reaktive, wasserunlösliche, hydrophobe Polymere sind solche, die im Temperaturbereich bis zu 250 °C thermisch stabil sind und dabei wasserunlösliche, aber wasserdurchlässige Polymerfilme auf der Oberfläche der wäßrige Flüssigkeiten absorbierenden, hochquellfähigen Polymeren bilden.

Geeignete reaktive, wasserunlösliche, hydrophobe Polymere sind außerdem solche, die Polymerfilme bilden, die im Temperaturbereich zwischen 0 °C und 250 °C nicht zum Verkleben neigen.

Schließlich sind geeignete Polymere insbesondere solche, die selbst funktionelle Gruppen aufweisen, die mit den Säuregruppen oder den Carboxylatgruppen der wäßrige Flüssigkeiten absorbierenden, hochquellfähigen Polymeren physikalische und/oder chemische Wechselwirkungen eingehen und dadurch auf deren Oberfläche gut spreiten und dort auch bei Benetzung mit Wasser fixiert bleiben.

Geeignete hydrophobe Polymere sind Homo- und Copolymerisate von Polysiloxanen, die statistisch verteilte Monomereinheiten mit sekundären und zusätzlichen primären Aminogruppen besitzen, welche als funktionelle Gruppen eine Wechselwirkung mit Säuregruppen eingehen. Die Wechselwirkung kann in einer chemischen Bindung oder

in einer elektrostatischen Wechselwirkurg bestehen.

Erfindungsgemäß einzusetzende hydrophobe Polysiloxane sind Poly[dimethyl-co-aminoalkylmethyl-co-methyl(polyether)]siloxane und Poly[dimethyl-co-aminoalkyl-methyl]siloxane gemäß Formel 1.

Formel 1:

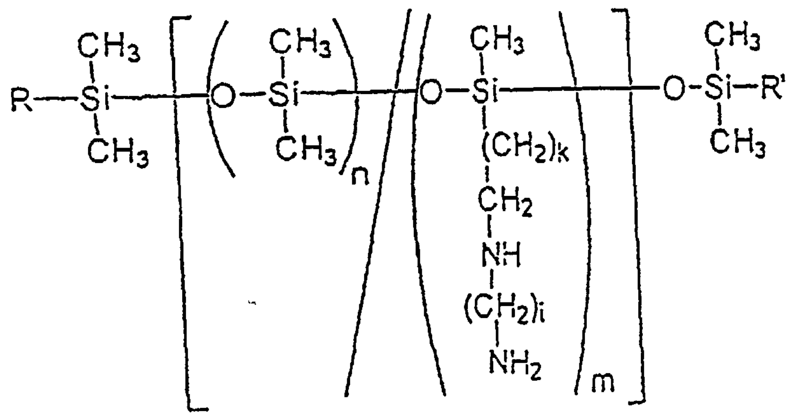

mit

n = 50 - 99
m = 1 - 50
k = 1 - 11
i = 1 - 12
R, R' = H, Alkyl, bevorzugt Methyl, Hydroxyalkyl Aminoalkyl.

Bevorzugt sind außerdem Polydimethylsiloxane, Polydialkylsiloxane sowie Polyalkylarylsiloxane und Polydiarylsiloxane mit Aminogruppen an den terminalen Siloxaneinheiten der Polysiloxanhauptkette.

Insbesondere bevorzugte erfindungsgemäß einzusetzende hydrophobe Polymere sind solche aminofunktionellen Polysiloxane, die durch Polyether-Seitenketten am Polysiloxanrückgrat eine verbesserte Emulgierbarkeit der Polymere in wäßrigen Medien aufweisen. Infolge der Modifikation des extrem hydrophoben Polysiloxans mit hydrophilen Polyetherseitenketten wie z. B. Polyethylenoxid, werden diese Polysiloxane, abhängig vom Gehalt an Polyethylenoxid relativ zur Polysiloxanmenge, zu selbstemulgierenden Systemen, die dann gemeinsam mit dem Nachvernetzungsmittel in wäßrigen Emulsionen eingesetzt werden können.

Die erfindungsgemäß einzusetzenden hydrophoben Polymere können linear oder verzweigt sein. Die Viskosität der Polymere kann zwischen 350 und 10000 mPas liegen. Der Einsatz von Mischungen verschiedener Polysiloxane ist möglich.

Durch die Verwendung der erfindungsgemäß einzusetzenden hydrophoben Polymeren in Verbindung mit einem zweiten Reagenz, das zu einer zusätzlichen Vernetzung an der Partikeloberfläche führt, z. B. Di- oder Polyole, Ethylencarbonat oder Bis- bzw. Polyepoxide, kann die Absorptionsgeschwindigkeit der hochquellfähigen vernetzten Polyacrylate bei geeigneten Versuchsbedingungen durch Variation der Menge des hydrophoben Polymeren gezielt variiert werden. Die Zeitabhängigkeit der Absorption ohne äußeren Druck kann vorteilhaft so eingestellt werden, daß 70 % der Absorptionskapazität des superabsorbierenden Polymeren nicht bereits nach 10 Minuten, sondern erst nach wenigstens dem 1,5-fachen dieser Zeit erreicht werden (siehe auch die Auswertung von Abbildung 1 bzw. Tabelle 1).

Tabelle 2 stellt die Zeit in Minuten dar, die Produkte gemäß der Erfindung (Beispiele 1 bis 8) und Vergleichsprodukte nach dem Stand der Technik (V1 bis V4) bis zur Erreichung einer 70%igen Absorptionskapazität benötigen, sowie den Zeitfaktor, um den sich, bezogen auf das Vergleichsprodukt V1 als konventioneller Superabsorber (Referenzsubstanz) diese Quellzeit verlängert.

Die erfindungsgemäß einzusetzenden hydrophoben Polymere werden in Mengen zwischen 0,005 Gew% und 2 Gew % verwendet. Bevorzugt werden zwischen 0,01 Gew % und 1,5 Gew% und besonders bevorzugt zwischen 0,05 und 0,8 Gew% modifiziertes, funktionelles Polysiloxan eingesetzt.

Da Oberflächenbeschichtungen mit Polysiloxanen wie auch mit anderen Polymeren, wie z.B. Polyethylenoxid, Polyalkyl(meth)acrylaten oder Polyamiden die Rieselfähigkeit der hochquellfähigen Polymeren vermindern, können keine unbegrenzt hohen Mengenanteile als Beschichtung aufgebracht werden.

Vielmehr ist die Einsatzmenge des hydrophoben Polymeren nach oben hin durch die für die maschinelle Verarbeitbarkeit der absorbierenden Polymergranulate notwendige Rieselfähigkeit begrenzt. Gewünscht ist eine möglichst gute Rieselfähigkeit der absorbierenden Polymeren. Produkte mit einer Rieselfähigkeit von weniger als 8 g/s (gemessen durch einen Trichter mit einer Weite von 10 mm am Auslauf) sind technisch nicht erwünscht.

Die Beschichtung kann mit einer einzelnen hydrophoben Substanz oder mit beliebigen Mischungen der beschriebenen hydrophoben Polymeren erfolgen.

In einer besonders bevorzugten Ausführungsform kann das erfindungsgemäß einzusetzende reaktive hydrophobe Polymere in seiner protonierten Form, nach Neutralisation der Aminogruppen durch Mineralsäuren oder organische Säuren, in Wasser oder organischen Lösemitteln/Wasser-Gemischen emulgiert oder gelöst aufgetragen werden (Beispiel 8).

Die Erfindung betrifft femer ein Verfahren zur Herstellung der erfindungsgemäßen wäßrige Flüssigkeiten absorbierenden quellbaren Polymeren, dadurch gekennzeichnet, daß ein wäßrige Flüssigkeiten absorbierendes quellbares Polymer, aufgebaut aus

a) monoethylenisch ungesättigten Säuregruppen tragenen Monomeren,

b) gegebenenfalls weiteren, damit copolymerisierbaren Monomeren und

c) gegebenenfalls als Pfropfgrundlage geeigneten wasserlöslichen Polymeren und

d) wenigstens zweifach ungesättigten, als Vernetzer fungierenden Monomeren, in Pulverform mit wenigstens

e) einem reaktiven, wasserunlöslichen hydrophoben Polymeren sowie

f) wenigstens einer weiteren reaktiven Komponente, die befähigt ist, mit Carboxylgruppen oder Carboxylatanionen unter Ausbildung von zusätzlichen Vernetzungsstellen an der Partikeloberfläche zu reagieren, beschichtet und anschließend einer Wärmebehandlung im Temperaturbereich von 80 bis 230°C, bevorzugt 170 bis 200 °C unterworfen wird.

Als reaktive Komponente f), die befähigt ist, mit Carboxylgruppen oder Carboxylatanionen unter Ausbildung von zusätzlichen Vernetzungsstellen an der Partikeloberfläche zu reagieren, werden bevorzugt Di- oder Polyole, Bisepoxide, höhere Epoxide, Polyamine, Polyamidoamine oder zyklische Kohlensäureester eingesetzt, und zwar typischerweise in Mengen von 0,1 bis ca. 1 Gew.-%, bezogen auf das Polymere aus a) bis d). Derartige Oberflächenvernetzungsmittel können mit jeweils mindestens 2 Carboxylgruppen der Hydrogele des quellbaren Polymers aus a) bis d) unter kovalenter Vernetzung auf der Oberfläche der Granulatpartikel reagieren.

Zu diesem Zweck werden eine oder mehrere der genannten reaktiven Verbindungen in Wasser und/oder einem organischen Lösungsmittel gelöst und auf die Oberfläche des getrockneten, hydrophilen, hochquellfähigen Polymerisats aufgetragen. Geeignete Mischaggregate zum Aufbringen des Nachvernetzungsmittels sind z.B. Patterson-Kelley-Mischer, DRAIS-Turbulenzmischer, Lödige-, Ruberg-, Schnecken-, Teller- und Wirbelschichtmischer, sowie kontinuierlich arbeitende senkrechte Mischer, in denen das Pulver mittels rotierender Messer in schneller Frequenz gemischt wird (Schugi-Mischer). Erfolgt die Herstellung der hochquellfähigen Polymeren nach dem Suspensionspolymerisationsverfahren, so kann die Zugabe des Nachvemetzungsmittels bereits in der Suspension erfolgen, d.h. vor der Isolierung des Polymers.

Anschließend wird das Polymerisatpulver bei Temperaturen von 80 - 230 °C, vorzugsweise zwischen 170 bis 200 °C thermisch behandelt. Die Zeitdauer der Nacherhitzung ist durch den Punkt begrenzt, bei dem das gewünschte Eigenschafisprofil des Superabsorbers durch Hitzeschädigung wieder zerstört wird.

Die Beschichtung des hochquellfähigen Polymeren mit einer mehrfach funktionellen, reaktiven Verbindung, die an der Oberfläche unter erhöhter Temperatur zu einer Erhöhung der Vernetzungsdichte und damit zu verbesserten Eigenschaften des hochquellfähigen Polymeren bei der Absorption unter Druck führt (z.B. Nachvernetzung mit Ethylencarbonat, Di-oder Polyolen, Bis- oder Polyepoxiden) kann vor (Beispiele 1-5, 7), gemeinsam mit (Beispiele 6 und 8) oder auch nach der Auftragung des Hydrophobiermittels auf das hochquellfähige Polymere erfolgen. Die für die Verbesserung der Absorptionseigenschaften unter Druck erforderliche Erhitzung bei der Nachvernetzung kann ebenfalls vor (Beispiel 7), nach oder gemeinsam mit (Beispiele 1-6, 8) dem Temperschritt, der zur Fixierung der hydrophoben Polymeren führt, durchgeführt werden.

Erfolgt die Beschichtung der hochquellfähigen Polymere mit erfindungsgemäß einzusetzenden reaktiven hydrophoben Polymeren nach der o. g. thermischen Behandlung zur Verbesserung der Absorptionseigenschaften der Polymerisate unter Druck, schließt sich in der Regel ein zweiter Tempervorgang zur Fixierung des reaktiven hydrophoben Polymeren auf der Oberfläche des hochquellfähigen Polymerisats an.

Optional kann die Beschichtung des Superabsorberpulvers mit hydrophobem Polymeren auch gemeinsam mit dem Oberflächenvernetzungsmittel als wäßrige Emulsion oder aber gleichzeitig durch getrennte Dosiereinrichtungen in einem Verfahrensschritt vor dem Nacherhitzungsschritt durchgeführt werden.

Eine mehrfache Wiederholung des Temperschritts ist möglich. Geeignete Mischaggregate zur Mischung des hydrophoben reaktiven Polymeren mit dem hochquellfähigen hydrophilen Polymerisat sind u.a. die genannten Schneckenmischer, Schugi-Mischer u.a..

Insbesondere ist es möglich, das hydrophobe Polymere und die mehrfach funktionelle Verbindung nacheinander auf das pulverförmige hochquellfähige Polymere aufzutragen und die erforderliche Temperung zur Oberflächennachvemetzung und gleichzeitiger Hydrophobierung in einem einzigen Schritt durchzuführen (Beispiele 1-5).

In einer besonders bevorzugten Verfahrensform werden die mehrfach funktionelle Verbindung und das hydrophobe Polymere in seiner Salzform in Wasser gelöst bzw. emulgiert und gemeinsam als saure Lösung auf das superabsorbierende Polymere aufgetragen (Beispiel 8).

Zur Temperung und Durchführung der eigentlichen Nachvemetzungsreaktion geeignet sind z. B. Bandtrockner, Heißlufttrockner oder Paddeltrockner.

Das erfindungsgemäß einzusetzende Hydrophobiermittel kann in Substanz, als Lösung in einem geeigneten organischen Lösungsmittel wie z. B. Chloroform, Toluol, Tetrahydrofuran etc., oder in seiner protonierten Form, nach Neutralisation der Aminogruppen durch Mineralsäuren oder organische Säuren, in Wasser oder organischen Lösemitteln emulgiert oder gelöst aufgetragen werden.

Die erfindungsgemäßen hochquellfähigen Polymeren mit kontrollierter Absorptionsgeschwindigkeit können in Hygieneartikeln zur Absorption von Körperflüssigkeiten eingesetzt werden.

Gegenstand der Erfindung ist somit femer die Verwendung der erfindungsgemäßen hochquellfähigen Polymeren in Hygieneartikeln zu Absorption von Körperflüssigkeiten.

Erfindungsgemäß einzusetzende hydrophile, hochquellfähige, pulverförmige Polymerisate sind Homo- und Copolymerisate auf der Basis von ungesättigten Carbonsäuren und / oder deren Derivaten.

Beispiele für ungesättigte Carbonsäuren und -derivate sind Acrylsäure, Methacrylsäure, Itaconsäure und Maleinsäure sowie deren Alkali-, Ammonium- und Aminsalze oder deren Amide wie (Meth)acrylamid, N - tert-Butyl(meth) acrylamid und N-Isopropyl(meth)acrylamid sowie Acrylnitril.

Die Verwendung weiterer Comonomere wie olefinisch ungesättigter Sulfonsäuren ist möglich. Als Beispiele seien erwähnt: Salze der 2-Acrylamido-2-methylpropansulfonsäure, Styrolsulfonsäure, Vinylsulfonsäure, Allyl- und Methallylsulfonsäure, insbesondere deren Alkali-, Ammonium und Aminsalze.

Die genannten Copolymerisate auf Basis ungesättigter Carbonsäuren und deren Derivate können als weitere Comonomere Polyglykolester ungesättigter Säuren enthalten, wie zum Beispiel Polyalkylenoxid(meth)acrylate der allgemeinen Formel 2:

Formel 2:

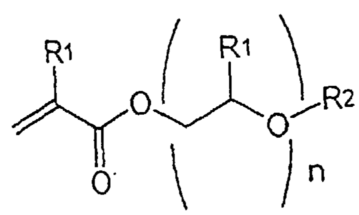

wobei

$R^1$ = Wasserstoff oder Methyl,
n = 2 bis 50 und
$R^2$ = Wasserstoff oder einen aliphatischen, araliphatischen oder cyclo aliphatischen ($C_1$-$C_{12}$)-Rest, beispielsweise Methyl, Ethyl oder Butyl

bedeuten.

Die den erfindungsgemäßen Hydrogelen zugrunde liegenden hydrophilen, hochquellfähigen Polymerisate sind vernetzt, d. h. sie enthalten Comonomere mit mindestens zwei Doppelbindungen, die in das Polymernetzwerk einpolymerisiert sind.

Geeignete Vernetzer sind Ester ungesättigter Carbonsäuren von Polyolen, wie Ethylenglycoldiacrylat, Di-,

Tri- oder Polyethylenglycoldiacrylat oder -methacrylat, Butandioldiacrylat bzw.-methacrylat sowie Trimethylolpropantriacrylat bzw. -methacrylat, ethoxylierte Trimethylolpropantriacrylat- bzw.-methacrylatderivate, Pentaerythrittetra(meth)acrylat, ethoxylierte Pentaerythrittetra(meth)acrylatderivate und Allylverbindungen wie (Meth)allyl-polyethylenglycol (meth)acrylat, Tetraallyloxyethan, Triallylamin, Tetraallylammoniumchlorid, Triallylmethylammoniumchlorid sowie Methylenbisacryl- bzw. -methacrylamid. Diese Vernetzer werden üblicherweise einzeln oder in Kombination miteinander in Mengen von 0,05 % bis 1 % eingesetzt.

Die den erfindungsgemäßen Hydrogelen zugrunde liegenden hydrophilen, hochquellfähigen Polymerisate können durch bekannte Polymerisationsverfahren hergestellt werden. Vorwiegend wird die Polymerisation in wäßriger Lösung nach dem Verfahren der sogenannten Gelpolymerisation durchgeführt. Andere Verfahren, wie z. B. Suspensionspolymerisationsverfahren sind ebenfalls gebräuchlich.

Dabei wird eine Lösung der Monomeren, Vernetzer und gegebenenfalls von weiteren Additiven, wie z. B. Polyvinylalkohol oder Oligo- bzw. Polysaccharide wie z.B. Stärke oder modifizierte Stärke als geeignete Pfropfgrundlage, in Wasser hergestellt. Derartige Polymere und Verfahren zu ihrer Herstellung sind in der Literatur bekannt, z. B. beschreibt die US 4,076,663 die Verwendung von Stärke und die GB 1 490 128 Polyvinylalkohol und Stärke als Pfropfgrundlage.

Die Monomerlösung wird zu mindestens 25 Mol%, bevorzugt zu mindestens 50 Mol % und besonders bevorzugt zu 50 - 80 Mol% als Natrium, Kalium oder Ammoniumsalz neutralisiert.

Die Polymerisation wird üblicherweise durch wasserlösliche Radikalinitiatorsysteme bei Temperaturen < 15 °C gestartet. Als Radikalinitiatorsysteme sind sowohl Redoxsysteme wie Ascorbinsäure oder Natriumsulfit mit wasserlöslichen Peroxiden (z.B. Wasserstoffperoxid, tert. Butylhydroperoxid) als auch thermische Initiatioren wie z. B. Azobis-(-2-amidinopropan)-dihydrochlorid oder Persulfate geeignet. Bevorzugt wird eine Kombination aus Redoxinitiatorsystem und thermischer Katalyse eingesetzt.

Nach dem Start verläuft die Polymerisation unter Ausnutzung des Trommsdorff-Norrish-Effekts praktisch bis zum quantitativen Umsatz. Die Reaktionsführung ist adiabatisch, das Reaktionsmedium kann Temperaturen von bis zu 120 °C erreichen und die Reaktion kann sowohl bei Normaldruck als auch unter erhöhtem Druck durchgeführt werden.

Bevorzugt wird die Polymerisation in einer Schutzgasatmosphäre, vorzugsweise unter Stickstoff, durchgeführt.

Das entstehende Gel wird anschließend zerkleinert, getrocknet, gemahlen und auf die gewünschte Partikelgröße abgesiebt.

Zur Verbesserung der Absorption unter Druck können die so erhaltenen Polymerisate in Pulverform mit Oberflächenvernetzern umgesetzt werden, d. h. mit Verbindungen, die Gruppen enthalten, die jeweils mit mindenstens zwei Carboxylgruppen der Hydrogele unter kovalenter Vernetzung auf der Oberfläche der Granulatpartikel reagieren können. Bevorzugt werden Di-oder Polyole, Bisepoxide, höhere Epoxide, Polyamine, Polyamidoamine oder cyclische Kohlensäureester eingesetzt, wie in den erwähnten Patenten beschrieben. Für die Oberflächennachvernetzung werden typischerweise Mengen von 0,1 bis ca. 1 Gew% eingesetzt.

**Testmethoden**

**Retention**

Die Retention wird nach der Teebeutelmethode bestimmt und als Mittelwert von drei Messungen angegeben. Ca. 200 mg Superabsorber werden in einen Teebeutel eingeschweißt und 30 Minuten lang in 0,9 %ige Kochsalzlösung getaucht. Anschließend wird der Teebeutel 10 Minuten lang zum Abtropfen aufgehängt. Danach wird der Teebeutel 5 min lang in einer Schleuder (23 cm Durchmesser, 1400 UpM) geschleudert und ausgewogen. Einen Teebeutel ohne Superabsorber läßt man als Blindwert mitlaufen. Die Retention wird berechnet nach der Formel:

$$\mathrm{Re}\mathit{tention} = \frac{\mathit{Auswaage\ -\ Blindwert\ -\ Einwaage}}{\mathit{Einwaage}} \text{ und in g/g angegeben.}$$

**Lösliche Anteile**

Die löslichen Anteile werden wie in der US 4 654 039 beschrieben bestimmt, mit der Ausnahme daß als Testflüssigkeit nicht synthetischer Urin sondern 0,9 %ige Kochsalzlösung benutzt wird.

**Rieselfähigkeit**

Die Durchflußgeschwindigkeit von superabsorbierenden Polymeren wird bestimmt, indem man eine repräsentative Probe von (**A**)=100 g durch einen Fließtrichter (gem. DIN 53492 mit einem Neigungswinkel von 40° und einer Düse gemäß DIN 53492 mit 10 mm ± 0,1 mm Öffnung) in ein Gefäß mit ausreichendem Volumen fließen läßt. Die Öffnung an der Unterseite des Trichters muß zunächst geschlossen sein. Die Probe wird vorsichtig in den Trichter geschüttet. Das Gefäß wird unter die Öffnung des Trichters gestellt. Der Trichter darf nicht Stößen und Erschütterungen ausgesetzt werden. Nachdem die Öffnung freigegeben ist, wird die Zeit ( **F** ) gestoppt, die für den Durchfluß der Probe benötigt wird, auf 0,1 g/sec genau erfaßt und auf 1 g bezogen. Die Angabe der Durchflußgeschwindigkeit erfolgt in g/s und wird auf 0,1 g/s genau angegeben.

Wenn die Öffnung freigegeben ist und die Probe nicht fließt, wird diese Probe als ***nicht-fließend*** eingestuft.

$$\text{Durchflußgeschwindigkeit (g/sec)} = \frac{A[g]}{F[s]}$$

**Zeitabhängige Absorption unter freier Quellung**

500 mg ± 0,5 mg des Superabsorbers werden in einen Plexiglaszylinder mit 5 cm Durchmesser und einem Edelstahl-Siebboden mit einer Maschenweite von 43 µm eingewogen. Die genaue Einwaage des Superabsorbers ***(Einwaage SAP)*** und das Gewicht des Plexiglaszylinders mit SAP ***(Bruttogewicht, trocken)*** werden notiert Der Plexiglaszylinder mit dem Superabsorber wird in einem Bad mit 0,9 Gew% iger Kochsalzlösung auf eine Glasfritte mit einem Durchmesser von 120 mm und der Porosität 0 gestellt, so daß sich der Siebboden mindestens 20 mm unterhalb der Oberfläche der Kochsalzlösung befindet. Dadurch wird sichergestellt, daß das hochquellfähige, vernetzte Polymere zu jedem Zeitpunkt der Messung von einem großen Überschuß an Kochsalzlösung umspült wird. Bei Erreichen des maximalen Quellvolumens des Superabsorbers im Plexiglaszylinder muß der Füllstand der Kochsalzlösung im Topf ausreichen, daß das absorbierende Gel nicht über die Oberfläche der Salzlösung hinausquillt.

Die Auswahl der Meßzeitpunkte ist beliebig, bevorzugt wurde der Zylinder nach jeweils 5, 10, 15, 30, 60 und 120 Minuten aus dem Bad entnommen. Eine Verlängerung der Quelldauer aufz. B. 4 oder 8 Stunden ist möglich. Der größte Teil der im Plexiglaszylinder enthaltenen, nicht absorbierten Kochsalzlösung läuft durch das Siebgewebe am Boden ab, der Rest der nicht gebundenen Flüssigkeit wird abgesaugt, indem der Plexiglaszylinder kurzzeitig auf eine Saugflasche mit aufgesetzter Gummidichtung (∅ = 6 cm) gesetzt wird, in der ein leichter Unterdruck herrscht, der durch eine Wasserstrahlpumpe erzeugt wird. Flüssigkeitstropfen, die nach dem Absaugen der nicht gebundenen Kochsalzlösung noch an dem Plexiglaszylinder haften, werden durch Aufsetzen des Plexiglaszylinders auf saugfähiges Haushalts-Vliespapier entfernt.

Der derart behandelte Plexiglaszylinder mit dem gequollenen Superabsorber wird auf einer Analysenwaage auf zwei Dezimalen genau ausgewogen ***(Bruttogewicht, gequollen)*** und anschließend sofort wieder in das Bad mit der NaCl-Lösung zurückgestellt. Die Absorption nach freier Quellung wird berechnet gemäß der Formel

$$\textit{Absorption (t)} = \frac{\textit{(Bruttogewicht, gequollen (t)) - (Bruttogewicht, trocken)}}{\textit{Einwaage SAP}}$$

Die so erhaltenen Zahlenwerte können graphisch ausgewertet werden, indem die Absorption (t) gegen die Zeit t aufgetragen wird.

**Fluff Combination Absorption Test (FCAT)**

Bei dieser Testmethode erfolgt die Bestimmung der Quellgeschwindigkeit durch rechnerunterstützte Aufzeichnung der Absorption einer Superabsorber/ Zellstoffmischung unter einem Druck von 21 g/cm$^2$.

Herstellung der Zellstoff-Absorber-Pads:

Auf der Analysenwaage werden 2,0000 ± 0,0005 g Zellstoff eingewogen. Daraus werden z. B. zwei oder mehrere Zellstofflagen geformt. Eine Zellstofflage wird auf der Analysenwaage plaziert. Anschließend werden möglichst gleichmäßig z.B. 0,2000 ± 0,0005 g Superabsorber auf die Zellstofflage gestreut. Die zweite Zellstofflage wird aufgelegt, so daß ein Sandwich Zellstoff/SAP/Zellstoff entsteht. Bei der Herstellung der Zellstoff-SAP Pads kann die SAP-Menge beliebig variiert werden. Der Superabsorber kann auch in mehreren Lagen eingestreut werden. Die eingesetzte Menge Superabsorber und die Anzahl der SAP-Lagen werden vermerkt. Bevorzugt wird mit einer Belegung von 60 %, d.h. 1,2 g SAP auf 2,0 g Zellstoff gearbeitet.

Für die Blindprobe wird ein Pad mit 2,0000±0,0005 g Fluff ohne Superabsorber hergestellt.

Testdurchführung:

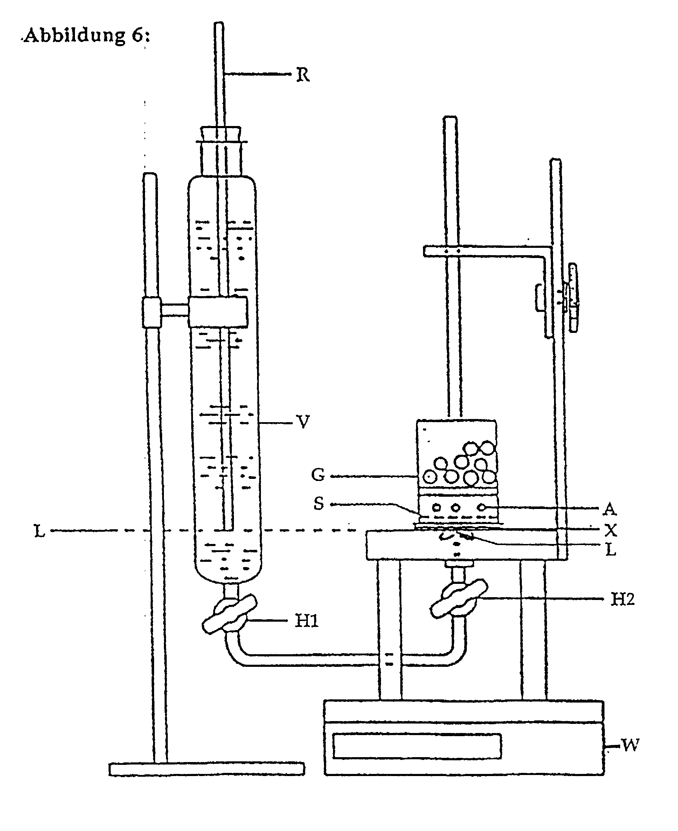

Die Testapparatur ist in Abbildung 6 schematisch dargestellt.

Das Flüssigkeitsniveau des Röhrchens im Tropftrichter und das des Tisches der Testapparatur (Austritt der Flüssigkeit) soll übereinstimmen. Das vorbereitete Pad wird so auf die Testapparatur gelegt, daß die Flüssigkeitsöffnung sich mittig unterhalb des Pads befindet. Der Prüfling wird mit einem Gewicht entsprechend 21 g/$cm^2$ belastet. Andere Belastungen sind möglich.

Zur Bestimmung der gesamten Flüssigkeitsaufnahme wird die Waage auf 0,00 g tariert. Die Messung der Absorptionskurve wird durch Öffnen der Hähne H1 und H2 und gleichzeitigem Start des an die Waage angeschlossenen Recorders begonnen. Der Recorder speichert automatisch das von der Waage W registrierte Gewicht. Während der Messung nimmt das Gewicht infolge der Absorption von Flüssigkeit ständig zu. Die Aufzeichnung der Blindwerte erfolgt auf gleiche Weise mit einem Zellstoffpad (2,0000±0,0005 g) ohne Superabsorber. Die aufgenommene Flüssigkeitsmenge der Blindprobe wird ebenfalls automatisch registriert und die Meßwerte der Blindprobe von der des Zellstoff-SAP Pads subtrahiert. Dadurch wird das Absorptionsverhalten des reinen Superabsorbers erhalten. Durch Division dieser Zahlenwerte durch die Einwaage Superabsorber in Gramm kann die zeitabhängige Absorption des Superabsorbers pro Gramm Superabsorber berechnet werden.

Die so berechneten Zahlenwerte können graphisch durch Auftragung der Absorption gegen die Quelldauer dargestellt werden.

Herstellung eines Ausgangsmaterials für die Nachvernetzung und Hydrophobierung

**Polymer *A***

Eine zu 70 mol % mit Natronlauge teilneutralisierte Lösung von Acrylsäure, Vernetzern (0,2 % Trimethylolpropan-triethoxylat-triacrylat sowie 0,3 % a-Allyloxypolyethylenglycol-acrylat) und 2 % Methoxypolyethylenglycol-methacrylat in Wasser wird durch Zugabe von Initiatoren (15 ppm Ascorbinsäure, 100 ppm 2,2'-Azobis-(2-amidinopropan) dihydrochlorid, 100 ppm Wasserstoffperoxidlösung und 150 ppm Natriumperoxodisulfat) nach bekannten Verfahren polymerisiert.

Nach Beendigung der Polymerisation wird der gelartige Polymerblock zerkleinert und 120 min bei 150 °C getrocknet. Das Polymer wird anschließend gemahlen und auf die Kornfraktion 150 - 850 µm abgesiebt.

Man erhält ein hochquellfähiges Polymeres mit einer Retention von 38 g/g in 0,9 %iger Kochsalzlösung. Das Polymer ***A*** enthält noch ca 5 % extrahierbare Anteile (gemessen nach 1 h).

In den nachfolgenden Beispielen und Vergleichsbeispielen wurden folgende hydrophobe Polymere zur Oberflächenbehandlung des Ausgangsmaterials PolymerA verwendet:

Siliconoel NM 4266-750 (Handelsprodukt der HÜLS Silicone GmbH, Nünchritz)

Es handelt sich um ein statistisches Polysiloxancopolymeres gemäß Formel 1 mit n=99 und m=1, k=3 und i=2 mit einer Viskosität von ca. 750 mPa*s.

Siliconoel NM 4266-1000 (Hüls Silicone GmbH, Nünchritz)

Es handelt sich um ein statistisches Polysiloxancopolymeres mit ca. 6 Mol% aminogruppenhaltigen Comonomereinheiten und einer Viskosität von ca. 1000 mPa*s.

Magnasoft HSSD (Handelsprodukt von OSi Specialities)

Das Produkt ist ein aminomodifiziertes Polyethersilicon mit ca. 0,25 % Stickstoffgehalt und einer Viskosität von ca. 3700 mPa*s.

Siliconoel AP 500

Das Produkt ist ein Polydimethylsiloxan mit einer Viskosität von ca. 500 mPa*s ohne funktionelle Gruppen.

**Beispiel 1.**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Anschließend werden 0,15 g Siliconöl NM 4266-750 bei 1000 UpM aufgetragen. Das so behandelte Produkt wird 30 Minuten bei 190 °C im Umluftofen getempert. Die Ergebnisse sind der Tabelle 1 zu entnehmen.

**Beispiel 2.**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Anschließend werden 0,3 g Siliconöl NM 4266-750 (Handelsprodukt

von HÜLS Silicone GmbH, Nünchritz) bei 1000 UpM aufgetragen. Das so behandelte Produkt wird 30 Minuten bei 190 °C im Umluftofen getempert. Die Ergebnisse sind der Tabelle 1 zu entnehmen.

**Beispiel 3.**

150 g eines pulverförmigen Superabsorbers Polymere ***A*** werden in einem senkrecht stehenden Labormischer mit schnelllaufenden Messern vorgelegt und bei 1000 UpM zunächst mit 0,75 g Triethanolamin, gelöst in einem Gemisch von 3 g Wasser und 6 g Aceton Versetzt. Anschließend werden 1,2 g Siliconöl NM 4266-750 (Handelsprodukt von HÜLS Silicone GmbH, Nünchritz) bei 1000 UpM aufgetragen. Das so behandelte Produkt wird 30 Minuten bei 190 °C im Umluftofen getempert. Die Ergebnisse sind der Tabelle 1 zu entnehmen.

**Beispiel 4.**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Anschließend werden 1,2 g Siliconöl NM 4266-750 (Handelsprodukt von HÜLS Silicone GmbH, Nünchritz) bei 1000 UpM aufgetragen. Das so behandelte Produkt wird 30 Minuten bei 190 °C im Umluftofen getempert. Die Ergebnisse sind der Tabelle 1 zu entnehmen.

**Beispiel 5.**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Anschließend werden 2,25 g Siliconöl NM 4266-750 (Handelsprodukt von HÜLS Silicone GmbH, Nünchritz) bei 1000 UpM aufgetragen. Das so behandelte Produkt wird 30 Minuten bei 190 °C im Umluftofen getempert. Die Ergebnisse sind der Tabelle 1 zu entnehmen.

**Beispiel 6.**

150 g eines pulverförmigen Superabsorbers Polymer ***A*** werden in einem senkrecht stehenden Labormischer mit schnelllaufenden Messern vorgelegt und bei 1000 UpM mit einer Emulsion. bestehend aus 0,75 g Ethylencarbonat, 2,25 g Wasser und 0,3 g Siliconöl Magnasoft HSSD (Handelsprodukt von OSi, Düsseldorf) bei 1000 UpM beschichtet. Das so behandelte Produkt wird 30 Minuten bei 190 °C im Umluftofen getempert. Die Ergebnisse sind der Tabelle 1 zu entnehmen.

**Beispiel 7.**

150 g eines pulverförmigen Superabsorbers nach Vergleichsbeispiel V1 werden in einem senkrecht stehenden Labormischer mit schnelllaufenden Messern vorgelegt und bei 1000 UpM mit 0,3 g Siliconoel NM 4266-750 (Produkt der Hüls Silicone GmbH, Nünchritz) behandelt. Das so hergestellte Produkt wird 30 Minuten bei 190 °C im Umluftofen getempert. Die Ergebnisse sind der Tabelle 1 zu entnehmen.

**Beispiel 8.**

150 g eines pulverförmigen Superabsorbers Polymer ***A*** werden in einem senkrecht stehenden Labormischer mit schnelllaufenden Messern vorgelegt und bei 1000 UpM mit 0,75 g Ethylencarbonat, gelöst in einer klaren, transparenten Emulsion, bestehend aus 2,25 g Wasser, 0,15 g Essigsäure (60 %ig), 0,3 g Siliconoel NM 4266-1000 (Produkt der Hüls Silicone GmbH, Nünchritz) und 6 g Aceton versetzt. Das so behandelte Produkt wird 30 Minuten bei 190 °C im Umlufiofen getempert. Die Ergebnisse sind der Tabelle 1 zu entnehmen.

**Beispiel 9.**

Auf der Analysenwaage werden 2,0000 ± 0,0005 g Zellstoff eingewogen. Daraus werden drei Zellstofflagen geformt. Eine Zellstofflage wird auf der Analysenwaage plaziert. Anschließend werden möglichst gleichmäßig 0,6000 ± 0,0005 g Superabsorber gemäß Beispiel 1 auf die Zellstofflage gestreut. Die zweite Zellstofflage wird aufgelegt, so daß ein Sandwich Zellstoff/SAP/Zellstoff entsteht. Darauf werden erneut 0,600 g ± 0,0005 g Superabsorber gemäß Beispiel 1 möglichst gleichmäßig aufgestreut. Darauf wird die dritte Zellstofflage plaziert. Die eingesetzte Menge Superabsorber und die Anzahl der SAP-Lagen werden vermerkt.

Das so hergestellte Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

**Beispiel 10.**

Es wird ein Superabsorber - Zellstoff - Pad gemäß der Ausführung von Beispiel 9 hergestellt, jedoch unter Verwendung des Superabsorbers aus Beispiel 2.
Das Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

**Beispiel 11.**

Es wird ein Superabsorber - Zellstoff - Pad gemäß der Ausführung von Beispiel 9 hergestellt, jedoch unter Verwendung des Superabsorbers aus Beispiel 5.
Das Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

**Beispiel 12.**

Es wird ein Superabsorber - Zellstoff - Pad gemäß der Ausführung von Beispiel 9 hergestellt, jedoch unter Verwendung des Superabsorbers aus Beispiel 6.
Das Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

**Vergleichsbeispiel 1**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Dann wird das so behandelte Produkt 30 Minuten bei 190 °C im Umluftofen erhitzt. Die Ergebnisse sind der Tabelle 1 zu entnehmen.

**Vergleichsbeispiel 2**

150 g eines pulverförmigen Superabsorbers Polymer ***A*** werden in einem senkrecht stehenden Labormischer mit schnelllaufenden Messern vorgelegt und bei 1000 UpM zunächst mit 0,75 g Ethylencarbonat, gelöst in einem Gemisch von 3 g Wasser und 6 g Aceton versetzt. Anschließend werden 1,8 g Siliconöl Siliconöl AP 500 (Wacker GmbH) bei 1000 UpM aufgetragen. Danach wird das so behandelte Produkt 30 Minuten bei 190 °C im Umluftofen getempert. Die Ergebnisse sind der Tabelle 1 zu entnehmen.

**Vergleichsbeispiel 3**

150 g des pulverförmigen Superabsorbers aus Vergleichsbeispiel 1 werden in einem senkrecht stehenden Labormischer mit schnelllaufenden Messern bei 1000 UpM mit 1,2 g Siliconoel NM 4266-750 beschichtet. Die Quelleigenschaften des so behandelten Produkts werden ohne weiteres Erhitzen bestimmt. Die Ergebnisse sind der Tabelle 1 zu entnehmen.

**Vergleichsbeispiel 4**

150 g des pulverförmigen Superabsorbers Polymer ***A*** werden in einem senkrecht stehenden Labormischer mit schnelllaufenden Messern bei 1000 UpM mit 1,2 g Siliconoel NM 4266-750 beschichtet. Darin wird das so behandelte Produkt 30 Minuten bei 190 °C im Umluftofen erhitzt. Die Ergebnisse sind der Tabelle 1 zu entnehmen.

**Vergleichsbeispiel 5**

Es wird ein Superabsorber - Zellstoff - Pad gemäß der Ausführung von Beispiel 9 hergestellt, jedoch unter Verwendung des Superabsorbers aus Vergleichsbeispiel 1.
Das Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

**Vergleichsbeispiel 6**

Es wird ein Superabsorber - Zellstoff - Pad gemäß der Ausführung von Beispiel 9 hergestellt, jedoch unter Verwendung des Superabsorbers aus Vergleichsbeispiel 2.
Das Pad wird anschließend in der FCAT Testapparatur untersucht.
Für die Blindprobe wird ein Pad mit 2,0000±0,0005 g Fluff ohne Superabsorber hergestellt. Das Ergebnis in Form der aufgezeichneten Kurve ist der Abbildung 5 zu entnehmen.

In Abbildung 1 ist die Abhängigkeit des Quellverhaltens von der Menge des erfindungsgemäß einzusetzenden funktionellen Siliconöls dargestellt. Aufgetragen ist die Absorption der Produkte unter den Bedingungen freier Quellung (großer Überschuß von Lösungsmittel, drucklose Quellung) gegen die Quelldauer.
Die Produkte 1, 2, 4 und 5 wurden mit unterschiedlichen Mengen erfindungsgemäß einzusetzender funktioneller Siliconöle behandelt. Die Quellgeschwindigkeit der Produkte ist deutlich abhängig von der prozentualen Menge des hydrophoben Polymeren. Durch die Menge des hydrophoben Polymeren ist daher die Aufnahmegeschwindigkeit der hochquellfähigen Polymere direkt steuerbar.

Das Produkt V4 zeigt ein Absorptionsverhalten, wie es etwa dem Produkt gemäß Beispiel 1 entspricht (Abbildung 2). Produkt 1 wurde mit nur 0,1 Gew%, d.h. mit einem Achtel der bei V4 eingesetzte Menge erfindungsgemäß einzusetzenden funktionellen Siliconöls hergestellt und besitzt dadurch eine deutlich bessere Rieselfähigkeit als Produkt V4 (Produkt 1: 11,5 g/s, V4 : 7,7 g/s, siehe auch Tabelle 1). Die Rieselfähigkeit des Produkts 1 entspricht damit nahezu der optimalen Rieselfähigkeit des unbeschichteten Referenzprodukts V1 (12 g/s)

Vergleichsbeispiel V4 zeigt, daß auch ohne den Einsatz einer reaktiven Komponente, die zur zusätzlichen Vernetzung der Polymerpartikel an der Oberfläche führt (sogen. Nachvernetzungsmittel) eine gewisse Beeinflussung der Absorptionsgeschwindigkeit auftritt. Dieser Einfluß ist jedoch vergleichsweise gering. Infolge der dann notwendigen erheblich größeren Mengen, z. B. an Siliconöl besitzen derart hergestellte Produkte, deren Absorptionsgeschwindigkeit in dem bevorzugten Bereich liegt, eine nicht erwünschte mangelhafte Rieselfähigkeit.

Die Abbildung 3 zeigt, daß bei Verwendung eines hydrophoben Polymeren ohne funktionelle Gruppen (Vergleichsbeispiel V2: Polydimethylsiloxan) unter den für die Herstellung von erfindungsgemäßen hochquellfähigen Polymeren mit kontrollierter Absorptionsgeschwindigkeit erforderlichen Bedingungen keine wesentliche Abweichung vom Quellverhalten eines nicht mit hydrophoben Polymeren beschichteten hochquellfähigen Polymeren (Beispiel V1) erreicht wird. Auch dieses Verhalten wird als Hinweis darauf gewertet, daß das hydrophobe Polymere an der Oberfläche der hochquellfähigen Polymerpartikel über funktionelle Gruppen fixiert sein muß.

In Abbildung 4 ist der Unterschied des Quellverhaltens zweier Produkte mit gleicher Menge des erfindungsgemäß einzusetzenden funktionellen Siliconöls dargestellt, wobei das Produkt aus Beispiel 4 bei 190 ° C getempert wurde, während das Produkt aus Vergleichsbeispiel V3 nicht erhitzt wurde.

Vergleichbeispiel V1 ist das ohne erfindungsgemäß einzusetzendes funktionelles Siliconöl hergestellte, oberflächennachvernetzte hochquellfähige Polymere.

Die beiden Vergleichsprodukte V1 und V3 zeigen ein übereinstimmendes Absorptionsverhalten, während das Produkt aus Beispiel 4 infolge der Erhitzung eine deutlich flachere Absorptionskurve aufweist. Ohne den Gültigkeitsbereich der vorliegenden Erfindung einschränken zu wollen, wird angenommen, daß zur Generierung von Produkten mit dem gewünschten Absorptionsverhalten bei akzeptabler Rieselfähigkeit (≥ 8 g/s) eine Fixierung der erfindungsgemäß einzusetzenden funktionellen Siliconöle an der Oberfläche der hydrophilen, hochquellfähigen Polymerpartikel erfolgen muß, die durch den Temperschritt erreicht wird.

Die Eigenschaft der kontrollierten Verlangsamung der Aufnahmegeschwindigkeit bleibt auch dann erhalten, wenn, die Superabsorberpartikel von einander separiert und in einem Baumwollpad fixiert vorliegen. Die Veränderung des Quellverhaltens durch die hydrophobe Beschichtung mit erfindungsgemäßen Polymeren ist somit eine Eigenschaft des Einzelpartikels und wird nicht durch Agglomeration von einzelnen Partikeln zu einem hydrophoben Agglomerat mit verringerter Oberfläche hervorgerufen.

Als Experiment zur Überprüfung der Quellgeschwindigkeit voneinander separierter Partikel ist der Fluff Combination Absorption Test geeignet. Bei diesem Test wird ein Pad, bestehend aus hochquellfähigen Polymeren und Baumwoll-Fluff hergestellt und mit einem Druck belastet. Der Druck kann zwischen 7 $g/cm^2$ und 70 $g/cm^2$ variiert werden. Auch höhere Drucke sind möglich. Anschließend wird von unten drucklos die Zufuhr von Prüflösung erlaubt.

Bei dem Test wirken die Kapillarkräfte des Baumwoll-fluffs benetzend auf die einzelnen Partikel. Die Flüssigkeitsaufnahme über die Zeit wird notiert und in eine Absorptionskurve umgerechnet (siehe Abb. 5). Der Vergleich der Absorptionskurven von V5 (mit Superabsorber V1 ohne Hydrophobierung), V6 (mit Superabsorber V2, hydrophobiert mit einem nicht reaktiven, reinen Polydimethylsiloxan) und den erfindungsgemäßen Produkten gemäß Beispiele 9 - 12 (enhaltend die Superabsorber 1,2,5 und 6) zeigt die Verlangsamung der Aufnahmegeschwindigkeit der hochquellfähigen Polymere mit Aminosiliconbeschichtung sehr deutlich.
Diese Eigenschaft der kontrollierten Verlangsamung der Aufnahmegeschwindigkeit ist konträr zu der in der EP-A 705 643 beschriebenen Produkteigenschaft einer Verbesserung der Absorption unter Druck mit einer guten "initial absorbency".

Die in EP-A 705 643 verwendeten Beispiele 2 bis 5 zeigen, daß die Absorption der superabsorbierenden Polymere, die mit Siliconöl mit funktionellen Amino- oder Epoxygruppen behandelt wurden, sowohl vor als auch nach Temperung der Materialien nach 10 Minuten höher liegt und die Absorptionsgeschwindigkeit damit größer ist als bei nicht oberflächenbehandeltem Material gemäß den Vergleichsbeispielen 1 bis 8. Gegenstand der vorliegenden Erfindung ist jedoch das Gegenteil einer Verbesserung der Absorption kurz nach Beginn der Quellung. Der Vorteil der erfindungsgemäßen hochquellfähigen Polymeren ist vielmehr, daß aufgrund der Verlangsamung der Quellung der Superabsorber eine deutliche Verbesserung der Flüssigkeitsverteilung innerhalb des Absorptionskerns eines Hygieneartikels erreicht wird.

Tabelle 1

| Beispiel Nr. | ADDITIV Bezeichnung | ADDITIV Menge [Gew% b. SAP] | Zeit [min] 0 | 5 | 10 | 15 | 30 | 60 | 120 | Rieselfähigkeit g/s |
|---|---|---|---|---|---|---|---|---|---|---|
| 1 | NM 4266-750 | 0,1 | 0 | 9 | 18,5 | 25,5 | 34,5 | 39,5 | 41 | 11,5 |
| | | 0,1 | 0% | 22% | 45% | 62% | 84% | 96% | 100% | |
| 2 | NM 4266-750 | 0,2 | 0 | 6 | 14 | 20,5 | 33,5 | 42,5 | 45 | 10,5 |
| | | 0,2 | 0% | 13% | 31% | 46% | 74% | 94% | 100% | |
| 3 | NM 4266-750 | 0,8 | 0 | 5 | 10 | 16 | 27 | 35 | 37,5 | 8 |
| | | 0,8 | 0% | 13% | 27% | 43% | 72% | 93% | 100% | |
| 4 | NM 4266-750 | 0,8 | 0,0 | 3,0 | 6,0 | 8,5 | 16,0 | 31,0 | 39,0 | 8 |
| | | 0,8 | 0% | 8% | 15% | 22% | 41% | 79% | 100% | |
| 5 | NM 4266-750 | 1,5 | 0 | 2 | 4 | 6 | 12,5 | 28,5 | 38 | 5,5 |
| | | 1,5 | 0% | 5% | 11% | 16% | 33% | 75% | 100% | |
| 6 | Magnasoft HSSD | 0,2 | 0 | 11 | 21 | 27 | 34,5 | 38 | 39 | 12 |
| | | 0,2 | 0% | 28% | 54% | 69% | 88% | 97% | 100% | |
| 7 | NM 4266-750 | 0,2 | 0 | 8 | 16,5 | 20,5 | 29 | 35 | 37 | 12,1 |
| | | 0,2 | 0% | 22% | 45% | 55% | 78% | 95% | 100% | |
| 8 | NM 4266-1000 | 0,2 | 0 | 6,5 | 14,5 | 20,5 | 30 | 34,5 | 36,5 | 12,4 |
| | | 0,2 | 0% | 18% | 40% | 56% | 82% | 95% | 100% | |
| V1 | ohne | 0 | 0 | 19,5 | 29,5 | 34 | 39,5 | 42 | 42,5 | 12 |
| | | 0 | 0% | 46% | 69% | 80% | 93% | 99% | 100% | |
| V2 | Siliconöl AP 500 | 1,2 | 0 | 16,5 | 26 | 30,5 | 36 | 39 | 39,5 | 6,5 |
| | | 1,2 | 0% | 42% | 66% | 77% | 91% | 99% | 100% | |
| V3 | NM 4266-750 | 0,8 | 0 | 18,5 | 26,5 | 31,5 | 37,5 | 40,8 | 42 | 8 |
| | | 0,8 | 0% | 44% | 63% | 75% | 89% | 97% | 100% | |
| V4 | NM 4266-750 | 0,8 | 0,0 | 12 | 20 | 28 | 39 | 44 | 45 | 7,7 |
| | | 0,8 | 0% | 27% | 44% | 62% | 87% | 98% | 100% | |

Angaben der Absorption in g/g bzw %

Tabelle 2:

| Beispiel | Zeit [min] | Zeitfaktor |
|---|---|---|
| 1 | 20 | 2 |
| 2 | 27 | 2,7 |
| 3 | 29 | 2,9 |
| 4 | 52 | 5,2 |
| 5 | 56 | 5,6 |
| 6 | 15,5 | 1,55 |
| 7 | 24,5 | 2,45 |
| 8 | 22,5 | 2,25 |
| V1 | 10 | 1 |
| V2 | 12 | 1,2 |
| V3 | 13 | 1,3 |
| V4 | 19,5 | 1,95 |

**Patentansprüche**

1. Wäßrige Flüssigkeiten absorbierende quellbare Polymere, aufgebaut aus

a) monoethylenisch ungesättigte Säuregruppen tragenden Monomeren,

b) gegebenenfalls weiteren, damit copolymerisierbaren Monomeren und

c) gegebenenfalls als Pfropfgrundlage geeigneten wasserlöslichen Polymeren und

d) wenigstens zweifach ungesättigten, als Vernetzer fungierenden Monomeren, dadurch gekennzeichnet, daß die Polymeren mit

e) einem reaktiven, wasserunlöslichen hydrophoben Polymeren der allgemeinen Formel I

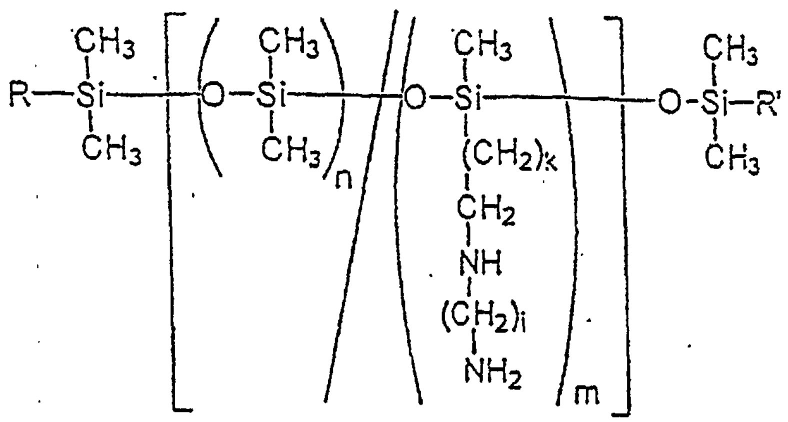

mit

n = 50 bis 99
m = 1 bis 50
k = 1 bis 11

i = 1 bis 12
R = H, Alkyl, bevorzugt Methyl, Hydroxyalkyl, Aminoalkyl
R' = H, Alkyl, bevorzugt Methyl, Hydroxyalkyl, Aminoalkyl

f) sowie einer weiteren reaktiven Komponente, die befähigt ist, mit Carboxylgruppen oder Carboxylatanionen unter Ausbildung von zusätzlichen Vernetzungsstellen an der Partikeloberfläche zu reagieren,

beschichtet und getempert worden sind.

**2.** Polymere nach Anspruch 1, bei denen das hydrophobe Polymer nach Formel I zusätzlich mit Polyether-Seitenketten am Polysiloxanrückgrat versehen ist.

**3.** Polymere nach Anspruch 1 oder 2, dadurch gekennzeichnet, daß sie die hydrophoben Polymeren e) in Mengen von 0,005 bis 2 Gew.-%, bezogen auf das Polymer aus a) bis d), bevorzugt in Mengen 0,01 bis 1,5 Gew.-% und besonders bevorzugt von 0,05 bis 0,8 Gew.-% enthalten.

**4.** Polymere nach einem der Ansprüche 1 oder 2, die als Komponente f) Ethylencarbonat und/oder mehrwertige Alkohole enthalten.

**5.** Polymere nach Anspruch 4, die die Komponente f) in Mengen von 0,1 bis 1 Gew.-%, bezogen auf das Polymer aus a) bis d) enthalten.

**6.** Polymere nach einem der vorhergehenden Ansprüche, bei denen die Temperung in einem Temperaturbereich von 80 bis 230°C, bevorzugt 170 bis 200°C liegt.

**7.** Polymere nach einem der vorhergehenden Ansprüche, die eine Rieselfähigkeit von größer gleich 8 g/s, gemessen nach DIN 53492, haben.

**8.** Polymere nach einem der vorhergehenden Ansprüche, die 70 % der maximalen Absorptionskapazität des superabsorbierenden Polymeren ohne Druckbelastung nicht bereits nach 10 Minuten, sondern erst nach frühestens 15 Minuten Quellzeit erreichen.

**9.** Verfahren zur Herstellung von wäßrige Flüssigkeiten absorbierenden quellbaren Polymeren nach einem der Ansprüche 1 bis 8, dadurch gekennzeichnet, daß ein wäßrige Flüssigkeiten absorbierendes quellbares Polymer, aufgebaut aus

a) monoethylenisch ungesättigte Säuregruppen tragenden Monomeren,

b) gegebenenfalls weiteren, damit copolymerisierbaren Monomeren und

c) gegebenenfalls als Pfropfgrundlage geeigneten wasserlöslichen Polymeren und

d) wenigstens zweifach ungesättigten, als Vemetzer fungierenden Monomeren, in Pulverform mit wenigstens

e) einem reaktiven, wasserunlöslichen hydrophoben Polymeren der Formel I

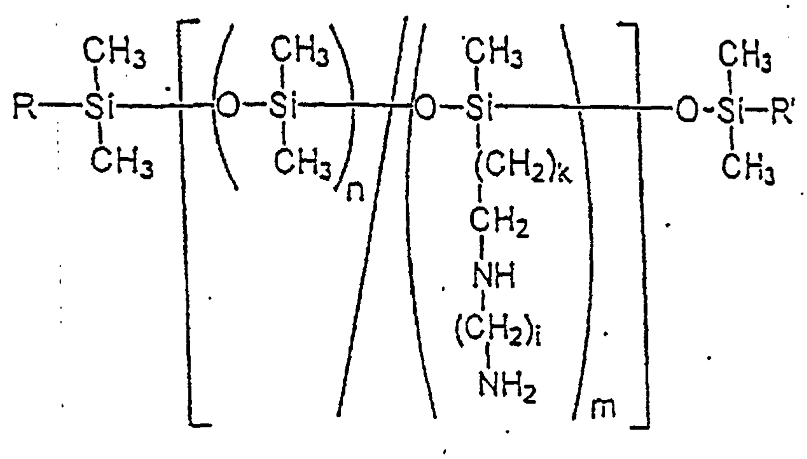

mit

n = 50 bis 99
m = 1 bis 50
k = 1 bis 11
i = 1 bis 12
R = Alkyl, bevorzugt Methyl, Hydroxyalkyl, Aminoalkyl
R' = H, Alkyl, bevorzugt Methyl, Hydroxyalkyl, Aminoalkyl

f) sowie wenigstens einer weiteren reaktiven Komponente, die befähigt ist, mit Carboxylgruppen oder Carboxylatanionen unter Ausbildung von zusätzlichen Vemetzungsstellen an der Partikeloberfläche zu reagieren,

beschichtet und anschließend einer Wärmebehandlung im Temperaturbereich von 80 bis 230°C, bevorzugt 170 bis 200°C unterworfen wird.

**10.** Verfahren nach Anspruch 9, bei dem das hydrophobe Polymer nach Formel I vor der Umsetzung mit zusätzlichen Polyether-Seitenketten am Siloxanrückgrat versehen wurde.

**11.** Verfahren nach Anspruch 9, bei dem die hydrophoben Polymeren e) in Mengen von 0,005 bis 2 Gew.-%, bevorzugt von 0,01 bis 1,5 Gew.-%, und besonders bevorzugt von 0,05 bis 0,8 Gew.-%, bezogen auf das aus a) bis d) aufgebaute quellbare Polymer eingesetzt werden.

**12.** Verfahren nach einem der Ansprüche 9 bis 11, bei dem das reaktive, wasserunlösliche hydrophobe Polymer e) in seiner protonierten Form verwendet wird.

**13.** Verfahren nach einem der Ansprüche 9 bis 12, bei dem das hydrophobe Polymer e) in seiner protonierten Form zusammen mit der mehrfach funktionellen Verbindung f) in Wasser gelöst bzw. emulgiert auf das quellbare Polymer aus a) bis d) aufgetragen wird.

**14.** Verfahren nach einem der Ansprüche 9 bis 13, bei dem die Beschichtung des quellfähigen Polymeren, aufgebaut aus a) bis d), mit der mehrfach funktionellen reaktiven Verbindung f) vor, gleichzeitig mit oder nach der Beschichtung mit dem hydrophoben, reaktiven Polymeren e) vorgenommen wird.

**15.** Verfahren nach einem der Ansprüche 9 bis 14, bei dem sich bei separater Beschichtung des quellfähigen Polymeren aus a) bis d) mit reaktivem hydrophobem Polymeren e) und mehrfachfunktioneller Verbindung f) sich an jeden Beschichtungsschritt ein Tempervorgang anschließt.

**16.** Verfahren nach einem der Ansprüche 9 bis 14, bei dem bei gleichzeitigem Beschichten des quellbaren Polymeren aus a) bis d) mit hydrophobem Polymeren e) und mehrfachfunktioneller Verbindung f) nur eine anschließende Wärmebehandlung vorgenommen wird.

**17.** Verwendung der Polymere nach Ansprüchen 1 bis 8 in Hygieneartikeln zur Absorption von Körperflüssigkeiten.

## Claims

**1.** Swellable polymers absorbing aqueous liquids, constituted of

a) monomers bearing monoethylenically unsaturated acid groups,

b) optionally, other monomers copolymerizable therewith, and

c) optionally, water-soluble polymers suitable as basis for grafting, and

d) at least di-unsaturated monomers acting as crosslinkers,
characterized in that the polymers have been coated with

e) a reactive, water-insoluble hydrophobic polymer of general formula 1

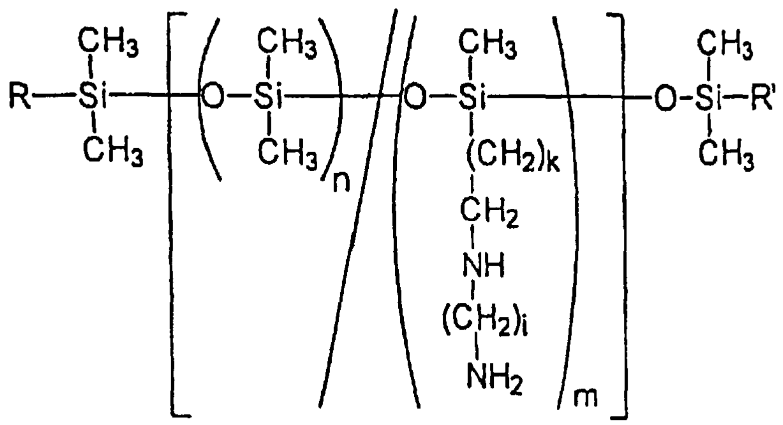

with

n = 50 - 99
m = 1 - 50
k = 1 - 11
i = 1 - 12, and
R = H, alkyl, preferably methyl, hydroxyalkyl, aminoalkyl,
R'= H, alkyl, preferably methyl, hydroxyalkyl, aminoalkyl,

f) another reactive component capable of reacting with carboxyl groups or carboxylate anions to form additional crosslinking sites on the particle surface, and postcured.

**2.** The polymers according to claim 1, wherein the hydrophobic polymer according to Formula 1 is additionally provided with polyether side-chains on the polysiloxane backbone.

**3.** The polymers according to claim 1 or 2, characterized in that they contain the hydrophobic polymers e) in amounts of from 0.005 to 2 wt.-%, relative to the polymer from a) through d), preferably in amounts of from 0.01 to 1.5 wt.-%, and more preferably from 0.05 to 0.8 wt.-%.

**4.** The polymers according to claim 1 or 2, characterized in that they contain ethylene carbonate and/or polyhydric alcohols as component f).

**5.** The polymers according to claim 4, which contain said component f) in amounts of from 0.1 to 1 wt.-%, relative to the polymer from a) through d).

**6.** The polymers according to any of the preceding claims, wherein said postcuring is effected within a temperature range of from 80 to 230°C, preferably from 170 to 200°C.

**7.** The polymers according to any of the preceding claims, which have a flowability of more than or equal to 8 g/s, measured according to DIN 53492.

**8.** The polymers according to any of the preceding claims, wherein 70% of the maximum absorptive capacity of the superabsorbent polymer will not be reached after only 10 minutes but, at the earliest, after a 15 minutes swelling time without pressure load.

**9.** A process for the production of the highly swellable polymers according to any of claims 1 through 8, which absorb aqueous liquids, characterized in that a swellable polymer absorbing aqueous liquids, constituted of

a) monomers bearing monoethylenically unsaturated acid groups,

b) optionally, other monomers copolymerizable therewith, and

c) optionally, water-soluble polymers suitable as basis for grafting, and

d) at least di-unsaturated, powdered monomers acting as crosslinkers,

is coated with at least

e) one reactive, water-insoluble hydrophobic polymer of Formula 1

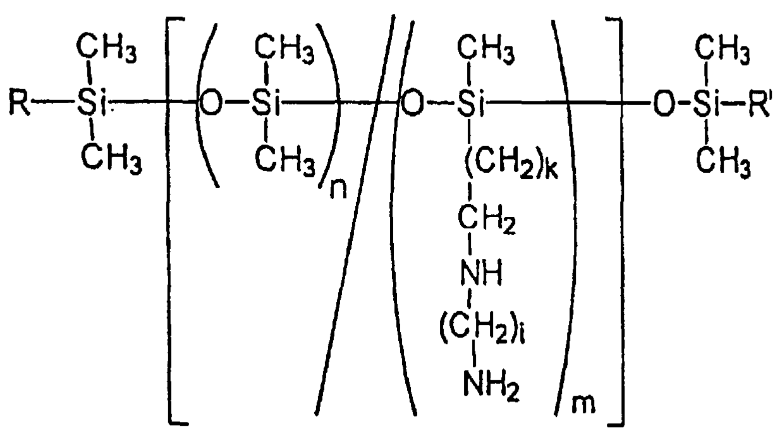

with

n = 50 - 99
m = 1 - 50
k = 1 - 11
i = 1 - 12, and
R = H, alkyl, preferably methyl, hydroxyalkyl, aminoalkyl,
R'= H, alkyl, preferably methyl, hydroxyalkyl, aminoalkyl,

and

f) at least one other reactive component capable of reacting with carboxyl groups or carboxylate anions to

form additional crosslinking sites on the particle surface,

and subsequently subjected to a thermal treatment in a temperature range of from 80 to 230°C, preferably from 170 to 200°C.

**10.** The process according to claim 9, wherein the hydrophobic polymer according to Formula 1 has been provided with additional polyether side-chains on the polysiloxane backbone prior to the reaction.

**11.** The process according to claim 9, wherein the hydrophobic polymers e) are used in amounts of from 0.005 to 2 wt.-%, preferably from 0.01 to 1.5 wt.-%, and more preferably from 0.05 to 0.8 wt.-%, relative to the swellable polymer constituted of a) through d).

**12.** The process according to any of claims 9 through 11, wherein the reactive, water-insoluble hydrophobic polymer e) is used in its protonated form.

**13.** The process according to any of claims 9 through 12, wherein the hydrophobic polymer e) in its protonated form is applied onto the swellable polymer from a) through d) together with the multi-functional compound f) as a solution or emulsion in water.

**14.** The process according to any of claims 9 through 13, wherein the swellable polymer constituted of a) through d) is coated with the multi-functional reactive compound f) prior to, simultaneously with, or after coating with the hydrophobic, reactive polymer e).

**15.** The process according to any of claims 9 through 14, wherein each coating step in the separate coating of the swellable polymer from a) through d) with reactive hydrophobic polymer e) and multifunctional compound f) is followed by a postcuring step.

**16.** The process according to any of claims 9 through 14, wherein merely a subsequent heat treatment is performed in the simultaneous coating of the swellable polymer from a) through d) with hydrophobic polymer e) and multi-functional compound f).

**17.** Use of the polymers according to claims 1 through 8 in hygiene articles for absorbing body fluids.

**Revendications**

**1.** Polymères gonflables, absorbant des liquides aqueux, constitués

a) de monomères portant des groupes acide monoéthyléniquement insaturés,
b) éventuellement d'autres monomères copolymérisables avec eux, et
c) éventuellement des polymères solubles dans l'eau appropriés comme base de greffage, et
d) au moins des monomères deux fois insaturés, fonctionnant comme agents de réticulation,

caractérisés en ce que les polymères ont été revêtus et recuits avec

e) un polymère hydrophobe insoluble dans l'eau, réactif, de la formule générale I :

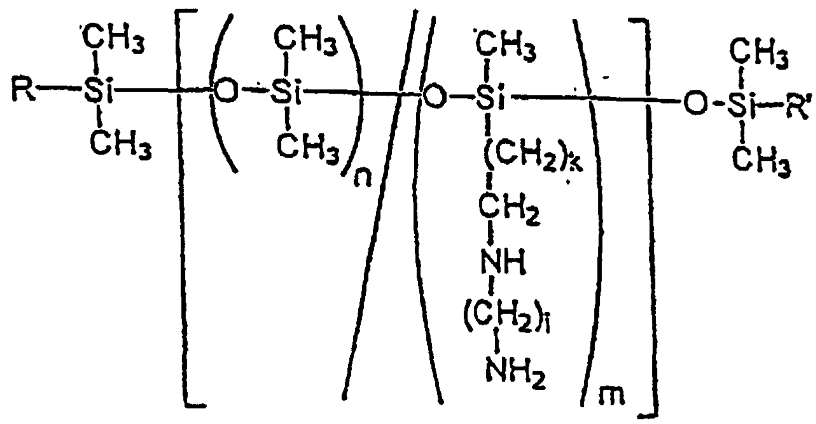

où

n = 50 à 99
m = 1 à 50
k = 1 à 11
i = 1 à 12
R = H, alkyle, de préférence méthyle, hydroxyalkyle, aminoalkyle,
R' = H, alkyle, de préférence méthyle, hydroxyalkyle, aminoalkyle,

f) ainsi qu'avec un autre composant réactif qui est capable de réagir avec des groupes carboxyle ou des anions carboxylate, avec formation d'emplacements de réticulation supplémentaires sur la surface des particules.

**2.** Polymères suivant la revendication 1, dans lesquels le polymère hydrophobe selon la formule I est pourvu en supplément de chaînes latérales de polyéther sur l'épine dorsale de polysiloxane.

**3.** Polymères suivant l'une des revendications 1 et 2, caractérisés en ce qu'ils contiennent les polymères hydrophobes e) en des quantités de 0,005 à 2% en poids par rapport au polymère à base de a) à d), de préférence en des quantités de 0,01 à 1,5% en poids et particulièrement avantageusement de 0,05 à 0,8% en poids.

**4.** Polymères suivant l'une des revendications 1 et 2, qui contiennent, comme composant f), du carbonate d'éthylène et/ou des polyalcools.

**5.** Polymères suivant la revendication 4, qui contiennent le composant f) en des quantités de 0,1 à 1% en poids, par rapport au polymère à base de a) à d).

**6.** Polymères suivant l'une des revendications précédentes, dans lesquels le recuit a lieu dans une gamme de températures de 80 à 230°C, de préférence de 170 à 200°C.

**7.** Polymères suivant l'une des revendications précédentes, qui présentent une capacité d'écoulement supérieure ou égale à 8 g/s, mesurée selon la norme DIN 53492.

**8.** Polymères suivant l'une des revendications précédentes, qui atteignent 70% de la capacité d'absorption maximale du polymère superabsorbant sans charge de pression, non pas déjà après 10 minutes, mais au contraire seulement après au plus tôt 15 minutes de temps de gonflement.

**9.** Procédé de préparation de polymères gonflables absorbant des liquides aqueux suivant l'une des revendications 1 à 8, caractérisé en ce qu'on revêt un polymère gonflable absorbant des liquides aqueux, constitué

a) de monomères portant des groupes acide monoéthyléniquement insaturés,
b) éventuellement d'autres monomères copolymérisables avec eux, et
c) éventuellement des polymères solubles dans l'eau appropriés comme base de greffage, et
d) de monomères au moins deux fois insaturés, fonctionnant comme agent de réticulation,

sous la forme d'une poudre avec au moins

e) un polymère hydrophobe insoluble dans l'eau, réactif, de la formule I:

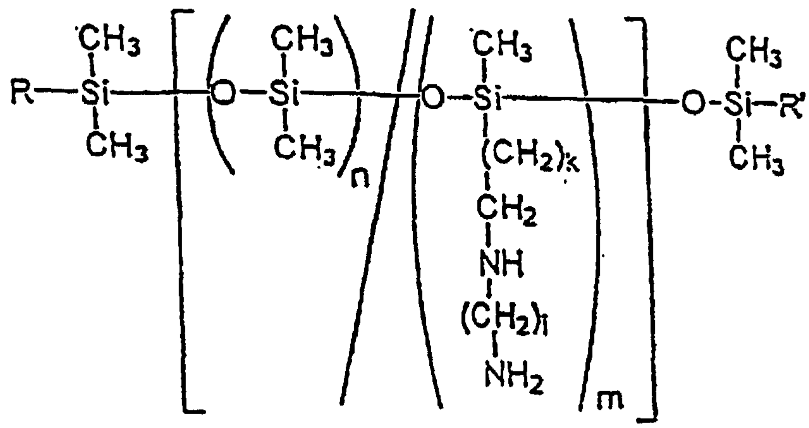

où

n = 50 à 99
m = 1 à 50
k = 1 à 11
i = 1 à 12
R = H, alkyle, de préférence méthyle, hydroxyalkyle, aminoalkyle,
R' = H, alkyle, de préférence méthyle, hydroxyalkyle, aminoalkyle,

f) ainsi qu'avec au moins un autre composant réactif qui est capable de réagir avec des groupes carboxyle ou des anions carboxylate, avec formation d'emplacements de réticulation supplémentaires sur la surface des particules,

et on soumet ensuite le tout à un traitement thermique dans la gamme de températures de 80 à 230°C, de préférence de 170 à 200°C.

**10.** Procédé suivant la revendication 9, dans lequel le polymère hydrophobe suivant la formule I est, avant la réaction, pourvu de chaînes latérales de polyéther supplémentaires sur l'épine dorsale de siloxane.

**11.** Procédé suivant le revendication 9, dans lequel on met en oeuvre les polymères hydrophobes e) en des quantités de 0,005 à 2% en poids, de préférence de 0,01 à 1,5% en poids, et particulièrement préférentiellement de 0,05 à 0,8% en poids, par rapport au polymère gonflable constitué de a) à d).

**12.** Procédé suivant l'une des revendications 9 à 11, dans lequel le polymère e) hydrophobe insoluble dans l'eau, réactif, est utilisé sous sa forme protonée.

**13.** Procédé suivant l'une des revendications 9 à 12, dans lequel le polymère hydrophobe e) est appliqué dans sa forme protonée sur le polymère gonflable à base de a) à d) conjointement au composé polyfonctionnel f) en solution ou émulsion dans l'eau.

**14.** Procédé suivant l'une des revendications 9 à 13, dans lequel le revêtement du polymère gonflable, constitué de a) à d), par le composé réactif f) plusieurs fois fonctionnel est effectué avant, simultanément ou après le revêtement par le polymère hydrophobe réactif e).

**15.** Procédé suivant l'une des revendications 9 à 14, dans lequel, dans le cas d'un revêtement séparé du polymère gonflable à base de a) à d) par un polymère hydrophobe réactif e) et un composé polyfonctionnel f), un processus de recuit fait suite à chacune des étapes de revêtement.

**16.** Procédé suivant l'une des revendications 9 à 14, dans lequel, dans le cas d'un revêtement simultané du polymère gonflable à base de a) à d) par un polymère hydrophobe e) et un composé polyfonctionnel f), seul un traitement thermique ultérieur est effectué.

**17.** Utilisation des polymères suivant l'une des revendications 1 à 8, dans des articles d'hygiène pour l'absorption de liquides corporels.

Abbildung 1

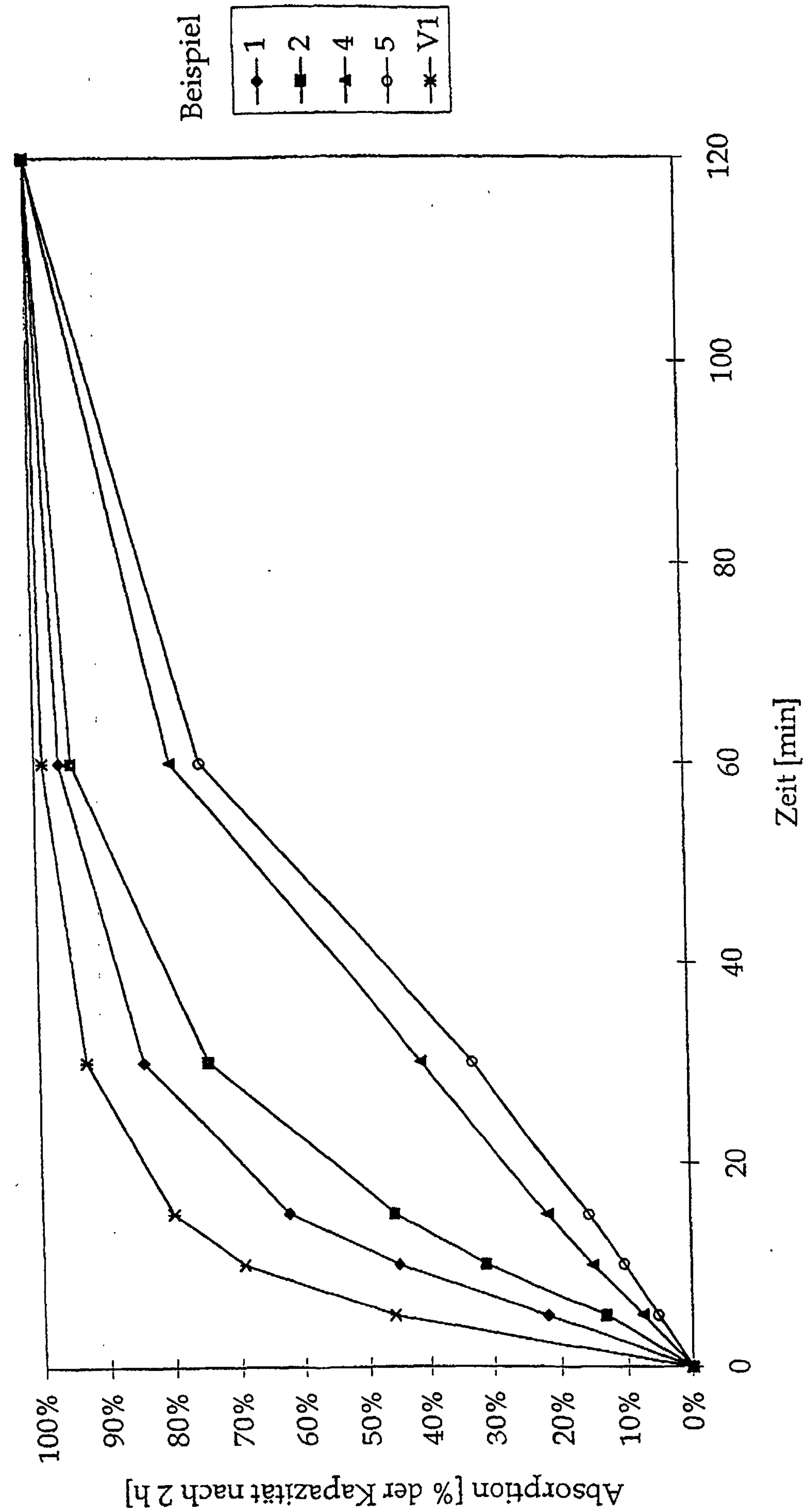
Beispiel
1
2
4
5
V1
Absorption [% der Kapazität nach 2 h]
100%
90%
80%
70%
60%
50%
40%
30%
20%
10%
0%
0
20
40
60
80
100
120
Zeit [min]

Abbildung 2

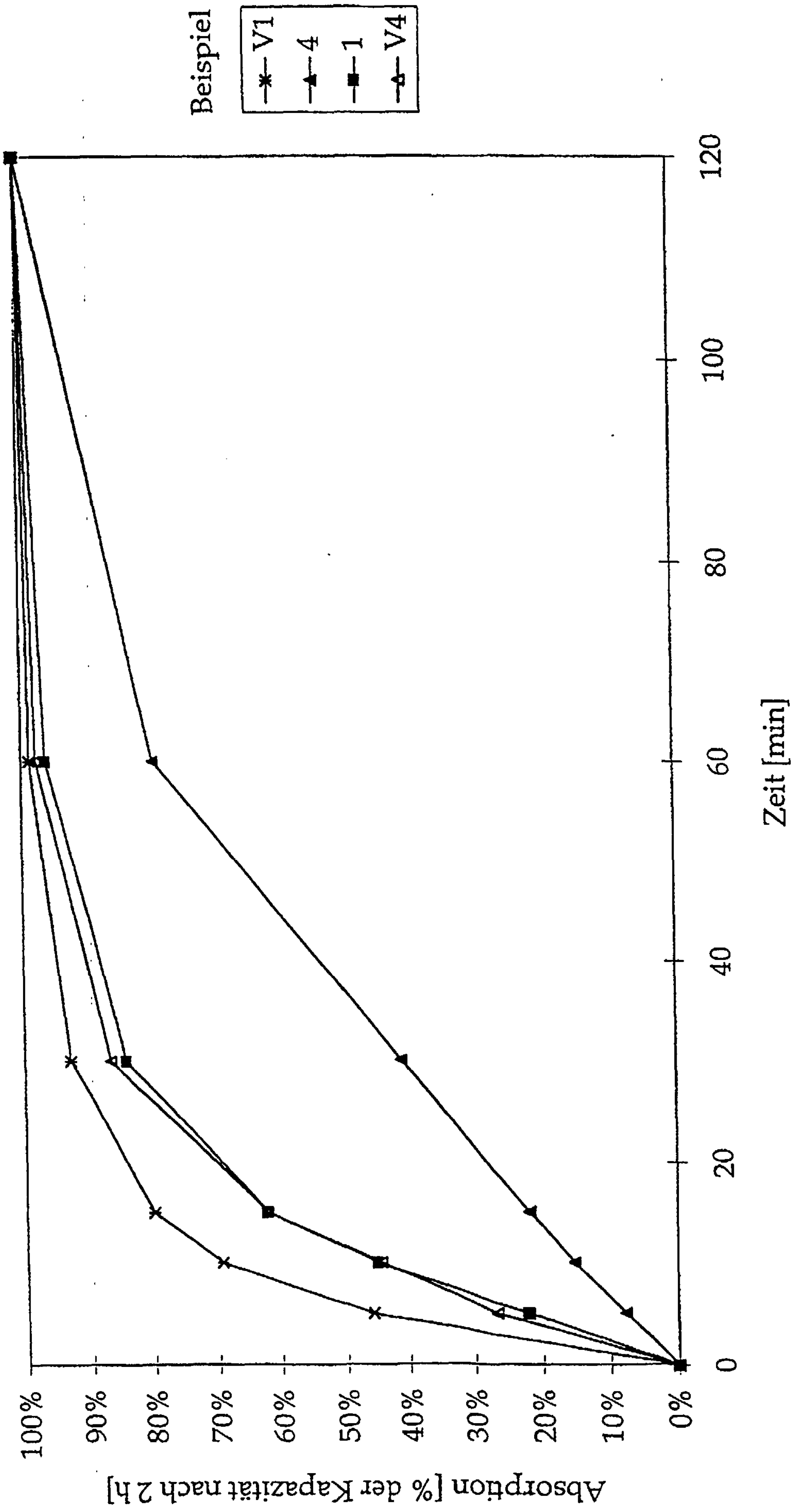
Beispiel
V1
4
1
V4
Absorption [% der Kapazität nach 2 h]
100%
90%
80%
70%
60%
50%
40%
30%
20%
10%
0%
Zeit [min]
0
20
40
60
80
100
120

Abbildung 3

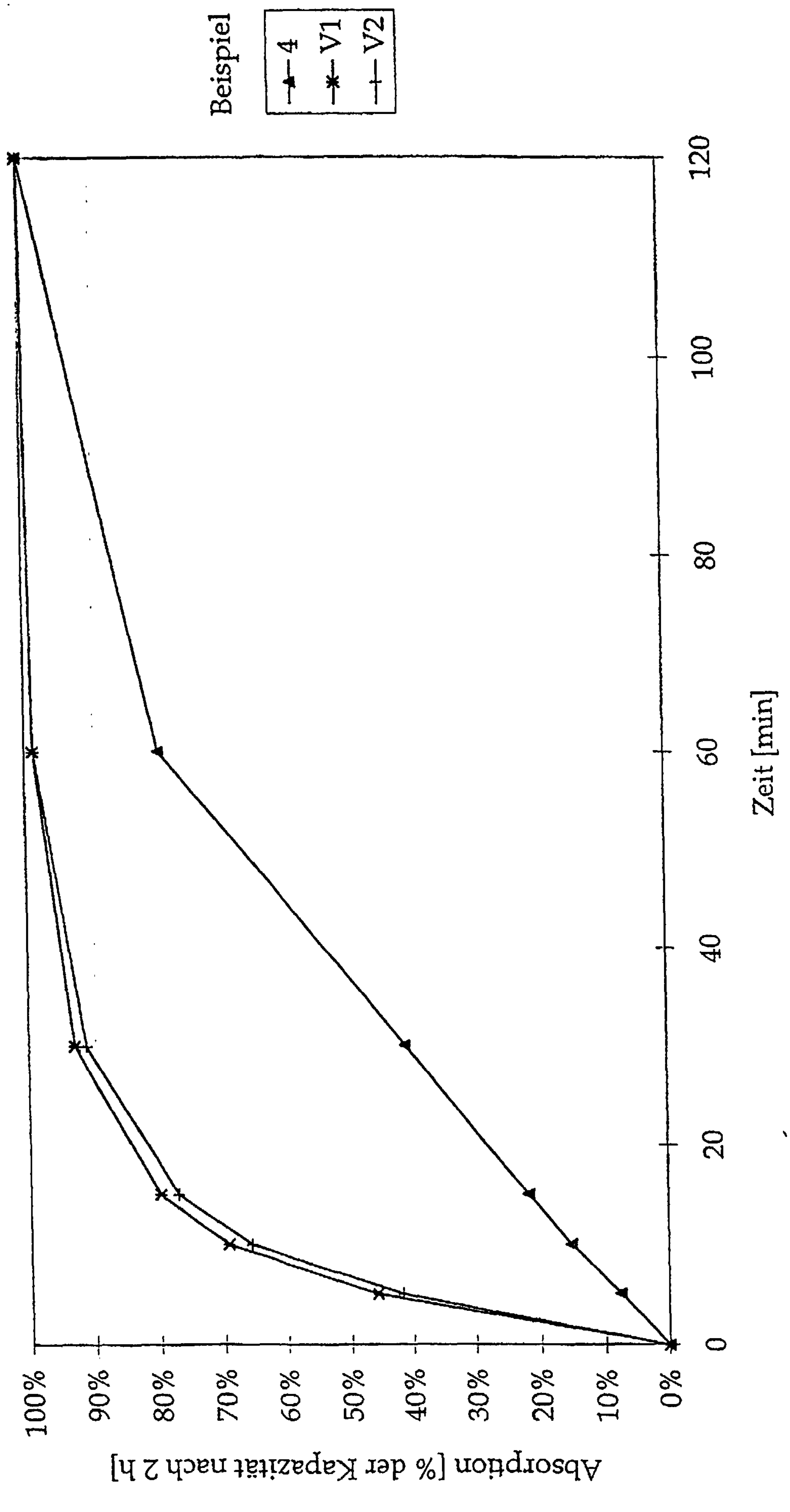
Beispiel
4
V1
V2
Absorption [% der Kapazität nach 2 h]
0%
10%
20%
30%
40%
50%
60%
70%
80%
90%
100%
Zeit [min]
0
20
40
60
80
100
120

Abbildung 4

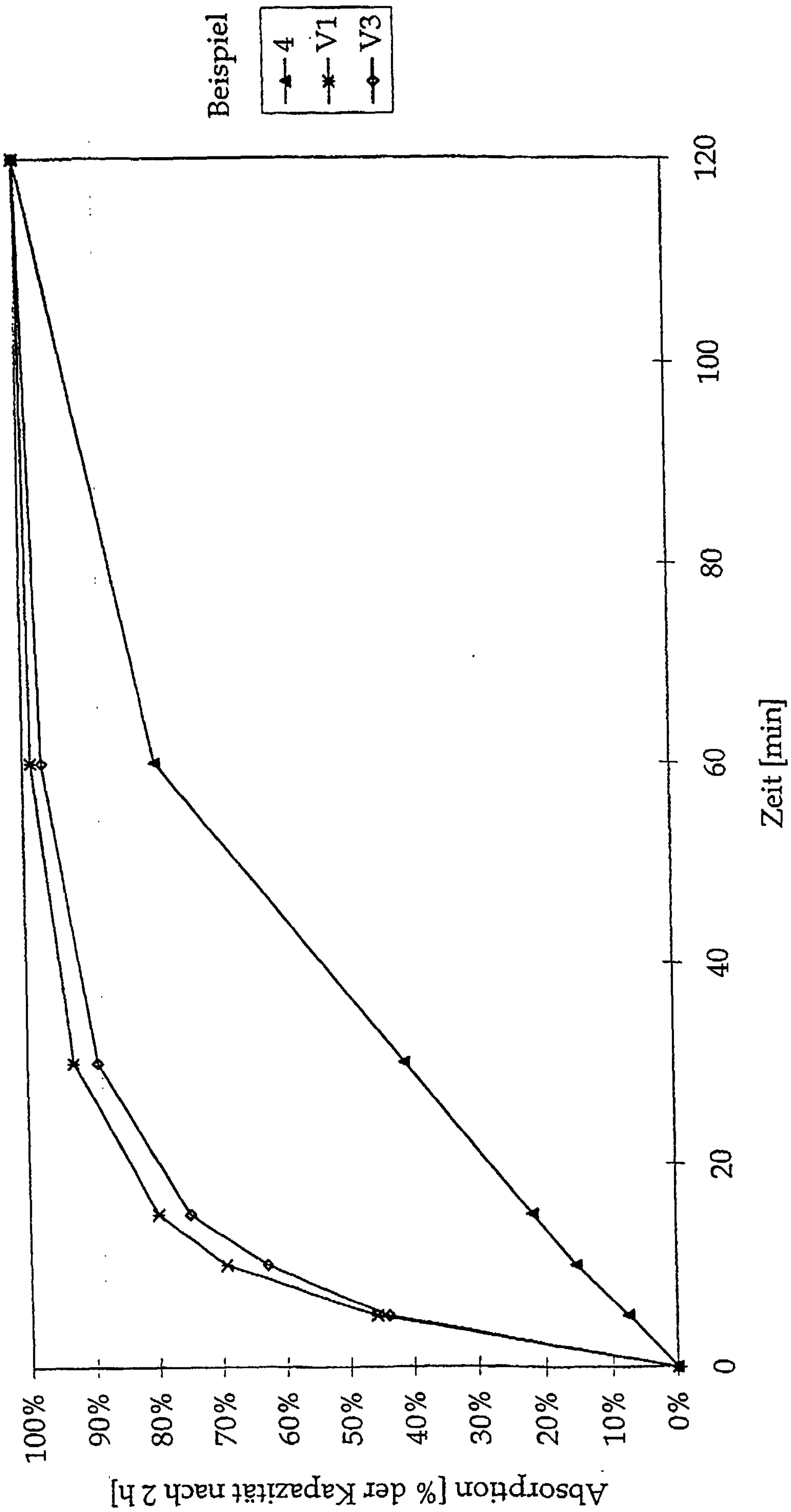
Beispiel
4
V1
V3
Absorption [% der Kapazität nach 2 h]
100%
90%
80%
70%
60%
50%
40%
30%
20%
10%
0%
0
20
40
60
80
100
120
Zeit [min]

Abbildung 5:

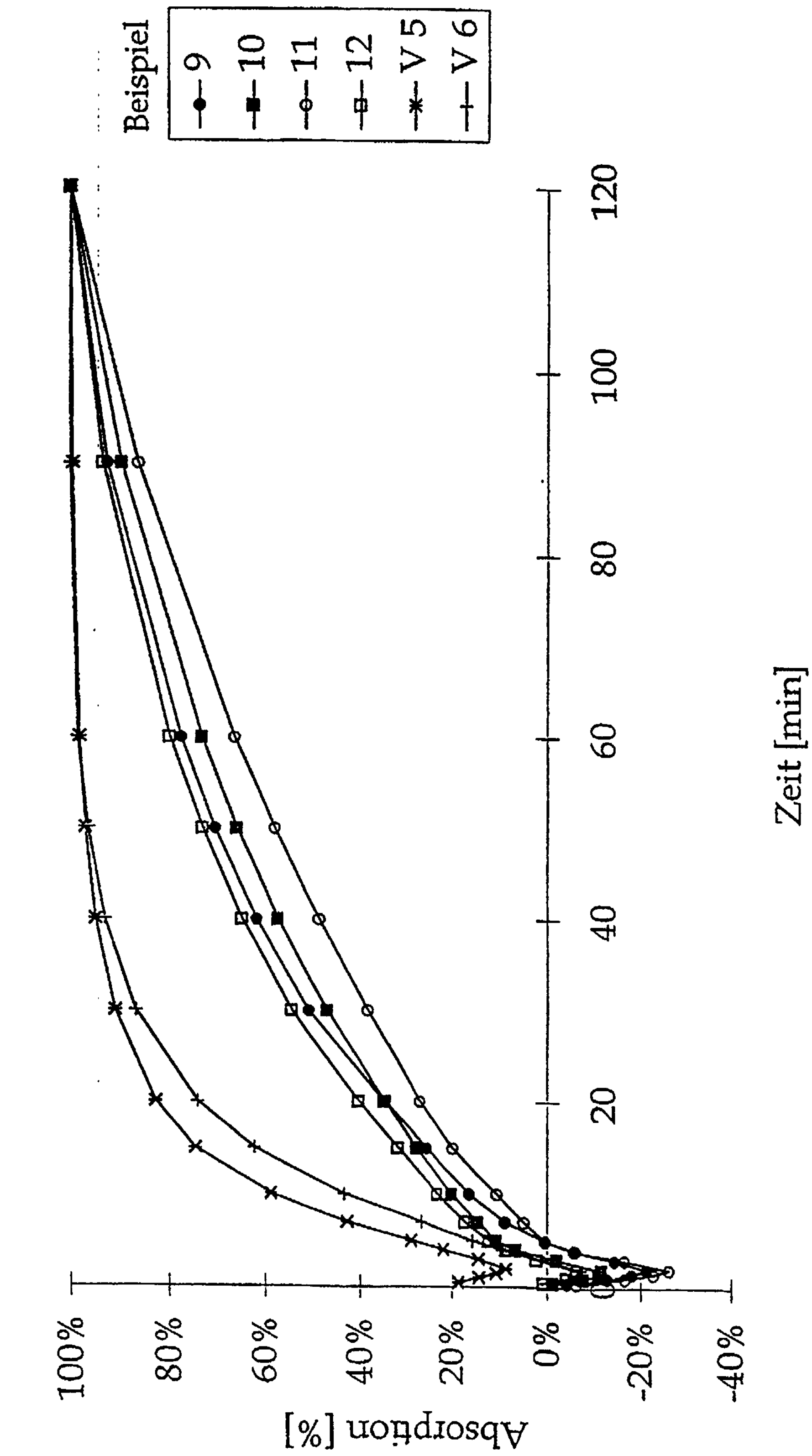
Absorption [%]
100%
80%
60%
40%
20%
0%
-20%
-40%
0
20
40
60
80
100
120
Zeit [min]
Beispiel
9
10
11
12
V 5
V 6

Abbildung 6: